# EUROPÄISCHE PATENTSCHRIFT

(11) **EP 1 842 630 B1**
(45) Veröffentlichungstag und Bekanntmachung des Hinweises auf die Patenterteilung: **21.10.2009**
(21) Anmeldenummer: 06007301.2
(22) Anmeldetag: 06.04.2006
(51) Int. Cl.: B25J 9/16, B62D 57/032

(54) **Haltungs- und Bewegungskontrollsystem für einen zweibeinigen humanoiden Roboter sowie Verfahren zu dessen Haltungs- und Bewegungskontrolle**
System and method for controlling the attitude and motion of a humanoid biped robot
Système et méthode de commande du maintien et du mouvement d'un robot humanoïde bipède

(43) Veröffentlichungstag der Anmeldung: 10.10.2007
(73) Patentinhaber: Universitätsklinikum Freiburg, 79106 Freiburg (DE)
(72) Erfinder: Mergner, Thomas, Dr., 79110 Freiburg (DE); Huethe, Frank, 79108 Freiburg (DE); Maurer, Christoph, Dr., 79104 Freiburg (DE); Schweigart, Georg, Dr., 79194 Gundelfingen (DE); Ament, Christoph, 79108 Freiburg (DE)
(74) Vertreter: Rösler, Uwe

(56) Entgegenhaltungen:
- EP-A- 1 424 172
- C. MAURER, T. MERGNER, R.J. PETERKA: "Multisensory control of human upright stance" EXPERIMENTAL BRAIN RESEARCH, Bd. 171, Nr. 2, Mai 2006 (2006-05), Seiten 231-250, XP002398772 ISSN: 0014-4819
- A. MAHBOOBIN; P.J. LOUGHLIN; M.S. REDFERN; S.O. ANDERSON; C.G. ATKESON; J.K. HODGINS: "Sensory adaptation in human balance control: lessons for biomimetic robotic bipeds" [Online] 2006, , XP002398773 Gefunden im Internet: URL:http://www.cs.cmu.edu/~cga/walking/swa yfinal2.pdf#search=%22sensory%20adaptation %20human%20balance%22> [gefunden am 2006-09-13]

## Beschreibung

### Technisches Gebiet

Die Erfindung bezieht sich auf ein Haltungs- und Bewegungskontrollsystem für einen zweibeinigen, humanoidartig ausgebildeten Roboter, der über eine Körperstruktur sowie zwei mit der Körperstruktur verbundene Stand- und Gehstrukturen verfügt, im Weiteren als Beine bezeichnet, mit einem gemeinsamem Massenschwerpunkt, im Weiteren als Körper bezeichnet, sowie über jeweils eine mit jeweils einem Bein über ein Gelenk um mindestens eine Achse drehbar verbundene Fußstruktur, im Weiteren als Fuß bezeichnet, der jeweils auf einer Unterstützungsfläche aufliegt, wobei mindestens ein Fuß mittels mindestens eines Aktuators schwenkbar ist. Ferner wird ein Verfahren zur Gleichgewichtskontrolle für einen zweibeinigen, humanoidartig ausgebildeten Roboter beschrieben.

### Stand der Technik

Bei zweibeinigen Robotern besteht eine große Gefahr des Umstürzens, wenn bei ihnen der "Körperschwerpunkt", der so genannte COM, 'center of mass', über eine relativ kleine Unterstützungsfläche, den Roboterfüßen, gehalten werden muss. So bedarf es bei einer leistungsfähigen Gleichgewichtskontrolle eines sich bewegenden Roboters der Berücksichtigung der Massenträgheit des Roboterkörpers, der am Roboter angreifenden externen Kraftfelder, wie bspw. die Erdgravitation, sowie weiterer von außen auf den Roboter einwirkender mechanischen Störungen. Bei diesen weiteren externen Störungen handelt es sich zumeist um Kontaktkräfte, bspw. Zug- oder Stoßwirkung oder, funktionell äquivalent dazu, Gewichtsveränderungen bzw. -umverteilungen, z.B. durch Aufheben/Ablegen/Verlagern einer Last, etc. Ferner gilt es, Bewegungen der Standfläche, z.B. auf einem Schiff, Fahrzeug, etc., Unebenheiten oder Neigungen der Standfläche, z.B. durch Steinchen, Abschüssigkeit des Bodens, etc., und/oder die Nachgiebigkeit der Standfläche, bspw. Sand, Teppich, etc., zu berücksichtigen.

Zweibeinige Roboter mit den bisher üblichen Gleichgewichtskontrollsystemen können mit derartigen externen Störungen Probleme haben und in der Regel nicht adäquat reagieren, um das Gleichgewicht zu halten, dies insbesondere dann, wenn sich diese externen Störungen ändern oder sich überlagern.

Bekannte Gleichgewichtskontrollsysteme bei zweibeinigen humanoiden Robotern involvieren typischerweise sensorbasierte Regelungssysteme. Bei den verwendeten Sensoren handelt es sich zumeist um eine Gruppe von Kraft/Drehmoment-Sensoren, wie beispielsweise Kraftsensoren zur Feststellung der sog. Bodenreaktionskräfte, und/oder um funktionell weitgehend äquivalente Sensoren, die direkt oder indirekt das Drehmoment in den Gelenken zwischen Körper des Roboters und seiner Fußstruktur messen, so genannte Körper-zu-Fuß-Drehmoment-Sensorsysteme. Eine weitere Gruppe der verwendeten Sensoren misst Winkel und/oder Winkelgeschwindigkeiten in den Gelenken zwischen Körper und Füßen des Roboters, mittels so genannter Körper-zu-Fuß-Winkel-Sensorsysteme. Eine weitere Gruppe von Sensoren liefert, unter Zwischenschaltung von Verrechnungsschritten, den 2-D Winkel zwischen Roboterkörper (repräsentiert durch die Linie seines COM zum Unterstützungspunkt des COM im Gelenkbereich) und der Resultierenden der externen Kraftfelder (im statischen Fall der Erdgravitationsvektor), ferner die 3D-Translationsbeschleunigung des COM im Raum und die 3D-Winkelgeschwindigkeit des COM im Raum (Körper-im-Raum-Sensorsystem).

Typisch für die bisher verwendeten sensorbasierten Regelungssysteme ist, dass sie eine globale interne Zustandsgröße für die Stabilität des Roboters erstellen, die dann beispielsweise als ein Maß dient für das Körpergleichgewicht im Raum oder die Körperpfad-Stabilität. Daraus werden Aktionen initiiert mit dem Ziel der Wiederherstellung der Stabilität. Die internen globalen Größen können beispielsweise sein: COP ("center of pressure") bzw. ZMP ("zero moment point") oder vergleichbare Größen. Siehe dazu Veröffentlichung M. B. Popovic, A. Goswami, and H. Herr, 2005, Ground Reference Points in Legged Locomotion: Definitions, Biological Trajectories and Control Implications. International Journal of Robotics Research, 24 (12): 1013-1032 (DOI: 10.1177/0278364905058363).

Nachteilig an dieser Art der bisher verwendeten sensorbasierten GleichgewichtsKontrollsysteme ist, dass sie nicht die Außenbedingungen ("Außenreize") und deren Änderungen selbst erfassen, die die Störungen der Stabilität des Roboters bewirken. Damit passen sich diese Kontrollsysteme nicht an Änderungen der Außenbedingungen an. Dadurch ist die Gleichgewichtskontrolle bei diesen Robotern häufig nur unter bestimmten Bedingungen gewährleistet. Allgemein gilt, dass ein Außenreiz nicht in allen denkbaren Bedingungen durch nur ein Sensorsignal allein ausreichend charakterisiert werden kann; dazu bedarf es der Fusion von Signalen verschiedenartiger Sensoren. Ein Kontrollsystem kann folglich nur dann ohne Informationsverlust arbeiten, wenn intern alle einwirkenden Außenreize repräsentiert sind, d.h. wenn diese durch Sensorfusion intern korrekt rekonstruiert werden.

Die Veröffentlichung "Multisensory control of human upright stance" (C. Maurer, T. Mergner, R.J Peterka) offenbart ein Kybernetisches Modell, das der Formalisierung des Gleichgewichtssystems des Menschen dient. Dieses Modell ist aber für eine technische Standkontrolle nicht verwendbar.

Ein zentrales Problem bei der Realisierung zweibeiniger menschenähnlicher Roboter, so genannter humanoider Roboter, die in Gestalt und in ihrer Bewegungsdynamik dem Menschen zumindest in groben Zügen nachgebildet sein sollen, ist die Gewährleistung einer möglichst stabilen aufrechten Körperhaltung sowohl in einem stationären aber insbesondere auch in einem dynamischen Zustand, d.h. beispielsweise im Zustand seiner Fortbewegung und bei sich ändernden oder überlagernden Außenreizen.

In Anlehnung an Sensorfusionsmechanismen, mit denen der Mensch seine Raumorientierung und sein dynamisches Verhalten im Raum kontrolliert, gilt es nun hier einen humanoiden Roboter anzugeben, dessen Stand- und Bewegungskontrolle zuverlässig gewährleistet sein soll.

### Darstellung der Erfindung

Die Lösung der gestellten Aufgabe ist im Anspruch 1 angegeben. Gegenstand des Anspruches 12 ist ein lösungsgemäßes Verfahren zur Haltungs- und Bewegungskontrollsystem für einen zweibeinigen Roboter. Den Erfindungsgedanken vorteilhaft weiterbildende Merkmale sind den Unteransprüchen sowie der weiteren Beschreibung insbesondere unter Bezugnahme auf das Ausführungsbeispiel zu entnehmen.

Als Lösung wird ein Haltungs- und Bewegungskontrollsystem im Sinne einer Gleichgewichtskontrolle für einen zweibeinigen, humanoidartig ausgebildeten Roboter vorgeschlagen, der über eine Körperstruktur inklusive zweier Stand- und Gehstrukturen verfügt, im Weiteren als Beine bezeichnet, mit gemeinsamem Massenschwerpunkt, im Weiteren als Körper bezeichnet, sowie über jeweils eine mit jeweils einem Bein über ein Gelenk um mindestens eine Achse drehbar verbundene Fußstruktur, im Weiteren als Fuß bezeichnet, wobei mindestens ein Fuß mittels Aktuator schwenkbar ist, wobei das System über eine interne Sensorsignalauswertung verfügt, die die auf den Roboter einwirkenden Außenreize schätzt und sie mittels einer Regelung kompensiert.

Die Schätzung der Außenreize sowie eine darauf basierende Regelung der Aktoren zur Gleichgewichtskontrolle des humanoiden Roboters erfolgt durch Vorsehen der folgenden Komponenten:
An wenigstens einem Bein ist wenigstens ein Gelenkwinkelmess-System, im Weiteren als Fußwinkel-Sensor bezeichnet, vorgesehen, das am Gelenk zwischen Bein und Fuß einen Körper-zu-Fuß-Winkel und die entsprechende Geschwindigkeit (bf und b^{•}f) erfasst. Im Bereich des Körpers ist mindestens ein Sensorsystem zur Erfassung von Winkel- und Linear-Beschleunigungen vorgesehen, im Weiteren als Im-Raum-Sensor bezeichnet, durch das Rotation, Rotationsgeschwindigkeit wie auch Translationsbeschleunigung des Körpers im Raum (bs, b^{•}s, b^{••}sₜᵣₐₙₛ) erfassbar ist.
Ferner ist ein Körper-zu-Fuß-Drehmoment-Sensorsystem, im Weiteren als Drehmoment-Sensor bezeichnet, vorgesehen, das direkt oder indirekt ein zwischen dem Körper und wenigstens einem Fuß wirkendes Drehmoment (τₐₙₖ) erfasst.

In einer darüber hinaus vorgesehenen Auswerteeinheit werden die Signale dieser drei Sensoren unter Maßgabe von Signalfusionen zum Erhalt von internen Schätzwerten der Außenreize verwendet und nach Umformungen unter Maßgabe einer weiteren Signalfusion in einem Hauptschätzwert (bs*) zusammengeführt.

Schließlich ist eine Kontrolleinheit vorgesehen, die unter Zugrundelegung des Hauptschätzwertes (bs*) Regelungssignale generiert, die zur Ansteuerung des pro Bein vorgesehenen Aktuators dienen, so dass eine vorgebbare Haltung oder Bewegung des Roboters trotz der Außenreize realisierbar ist.

Die hier präsentierte Gleichgewichtskontrolle wird somit lösungsgemäß mit Hilfe der o.g. drei Sensorsysteme sowie mittels geeigneter Fusionen der Sensorsignale erhalten, so dass es möglich wird, die Reaktionen des Roboters auf die Außenreize und ihre Änderungen anzupassen. Beispielsweise liefern bei Schwankungen des Roboters auf stationärer Unterstützungsfläche der Im-Raum-Sensor sowie der Fußwinkelsensor funktionell äquivalente Informationen. Der Roboter verbessert dann seine Stabilität dadurch, dass er überwiegend die Informationen von dem genaueren Sensorssystem, dem Fußwinkelsensor, verwendet anstelle der vom ungenaueren

Im-Raum-Sensor. Bei sich bewegender Unterstützungsfläche muss er dagegen überwiegend den Im-Raum-Sensor verwenden, was durch die Signalfusionen gewährleistet wird, wie im Weiteren gezeigt werden wird.

Vorteilhaft bei der Lösung mit interner Repräsentation der Außenreize durch ihre Rekonstruktion in Form von Schätzwerten ist ferner, dass diese Schätzungen auf einfache Weise mit weiteren Informationsquellen, bspw. mit den Signalen von anderen Sensorsystemen oder von gespeichertem, erschlossenem oder kommunikativ erhaltenem Wissen abgeglichen werden können, wodurch der Roboter in zukünftigen Anwendungen, in sofern dabei zusätzliches Wissen verfügbar wird, seine Gleichgewichtskontrolle verbessern kann.

Ein weiterer Vorteil bei der hier vorgestellten sensorbasierten Gleichgewichtskontrolle besteht darin, dass die Stabilität des Roboters durch gleichzeitige Verwendung von mehreren intern ermittelten Größen erreicht wird (jeweils eine Größe für jeden externen Störreiz), so dass eine bessere Robustheit der Gleichgewichtskontrolle beispielsweise gegenüber Messungenauigkeiten, Sensorausfall bzw. Störungen resultiert als dies bei der Kontrolle mit nur einer oder nur sehr wenigen Größen der Fall wäre.

Ein weiterer Vorteil kann dadurch entstehen, dass die Größe der Rückkopplung gering gehalten werden kann (im Sinne einer "weichen" Regelung), da sie sich an die Außenbedingungen anpasst. Beispielsweise kann die Verstärkung zunächst angepasst sein an die Überwindung von Körper-Massenträgheit und Kraftfeldeffekten, wie Gravitation, und erst bei Auftreten einer Kontaktkraft durch Stoß gegen den Roboter im Zuge der Sensorfusion um denjenigen Betrag erhöht werden, der für die Kompensation dieser Kraft notwendig ist. Dieser Effekt kann sich in einem geringeren Energieverbrauch und geringerer Abnutzung des Roboters auswirken. Eine niedrige Verstärkung erlaubt zudem höhere Totzeiten (Verzögerungszeiten im Rahmen der Regelung und Ansteuerung der Aktuatoren) in der Kontrolle als eine hohe Verstärkung, was die Stabilität der Regelung verbessert. Die Verwendung mehrerer geregelter Größen erlaubt zudem individuelle Verzögerungszeiten. Die auf die Situation bezogene und ihr angemessene statt möglichst harte, schnelle Reaktion führt zu mehr Stabilität.

Ein weiterer Vorteil besteht darin, dass man bedingt durch die gleichzeitige Verwendung mehrerer geregelter Größen gesamthaft nicht maximal genaue Sensoren benötigt, was sich bezüglich Sensorgröße und Sensorkosten günstig auswirkt.

Ein weiterer Vorteil bei der hier vorgestellten Gleichgewichtskontrolle kann dadurch entstehen, dass sie - implementiert in einem humanoiden (menschenähnlichen) Roboter - Ähnlichkeiten mit dem Gleichgewichtssystem des Menschen aufweist und somit für Verfahren geeignet ist, die auf den Menschen angewendet werden können, bspw. als biorobotische Verfahren zur Diagnostik von Gleichgewichtsstörungen und ihrer Therapien, für Therapiedesign bei Gleichgewichtsproblemen, Rehabilitationsverfahren, Exo-Skeletten, Orthesen und Neuronalen Prothesen sowie deren Anpassung an Patienten (Parametrisierung).

Die Erfindung umfasst die allgemeine technische Lehre, das Gleichgewicht von zweibeinigen Robotern durch mindestens eine sensorbasierte Regelschleife zu kontrollieren. Die Regelschleife beinhaltet außer den Sensoren und Sensorverarbeitungseinheiten mindestens einen Regler und mindestens einen Aktuator. Die Aktuatoren erzeugen ein Drehmoment in mindestens einem Gelenk zwischen Körper und Fußstrukturen des Roboters und rufen somit Bewegungen des Roboters relativ zum Fuß bzw. der Unterstützungfläche hervor, wobei seine Körper-Massenträgheit überwunden wird. Dabei dienen sie auch der Aufgabe, Effekte der externen Kraftfelder (z.B. Gravitation) auf den Roboter sowie die Effekte der weiteren oben ebenfalls genannten äußeren Störungen zu kompensieren mit dem Ziel, dass der Roboter seine vorgegebene Körperhaltung und -bewegung beibehalten kann.

Der Regler liefert das für die Ansteuerung der Aktuatoren notwendige Signal und kann beispielsweise als ein sog. PID-Regler (mit Proportional-, Integral- und Differential-Anteil) ausgelegt sein.

Das hier vorgeschlagene System weist außer dem Regler und dem Aktuator die o.g. drei Sensorsysteme sowie eine Verarbeitungseinheit für die Sensorsignale auf. In der Verarbeitungseinheit werden die Sensorsignale fusioniert zur Erstellung von internen Schätzungen der genannten externen Reize. Durch anschließende Zusammenführung der Schätzwerte zu einem einzigen Rückkopplungssignal entsteht ein Netzwerk, in dem es zu Interaktionen zwischen den Schätz-Signalen kommt.

Eine Besonderheit des Netzwerks in der Verarbeitungseinheit ist, dass bestimmte Sensorsignale mehr als einmal vertreten sind und dies mit entgegengesetzten Vorzeichen, so dass man geneigt sein könnte, in dem Netzwerk Kürzungen vorzunehmen. Aber es ist eine Eigenschaft der hier vorgeschlagenen Lösung, dass das Gleichgewichtskontrollsystem erstrebenswerte Eigenschaften aufweist, die vom Vorhandensein des Netzwerks in dieser Form abhängen. Dazu zählen
- das Vorhandensein einer Meta-Ebene, auf der die physikalischen Ereignisse in der Außenwelt abgebildet sind, so dass sie als solche in zukünftigen Anwendungen gelernt, erinnert, kommuniziert etc. werden können,
- Umwichtungen der relativen Sensorbeiträge zum Rückkopplungssignal bei Änderungen der Außenreize,
- Anpassung der Größe des Rückkopplungssignals an Änderungen der Außenreize,
- Robustheit der Gleichgewichtserhaltung gegenüber Ausfällen der Sensoren oder der bei der internen Verarbeitung erhaltenen oder verwendeten Signale, und
- Verwendbarkeit des Netzwerkes zur Selbst-Diagnose der erwähnten Ausfälle, wobei der Roboter selbst Lehnbewegungen zu diesem Zwecke in Situationen durchführt, während der von den Außenreizen nur der Erdgravitationseffekt vorhanden ist.

### Kurze Beschreibung der Erfindung

Die Erfindung wird nachstehend ohne Beschränkung des allgemeinen Erfindungsgedankens anhand von Ausführungsbeispielen unter Bezugnahme auf die Abbildungen exemplarisch beschrieben. Es zeigen:

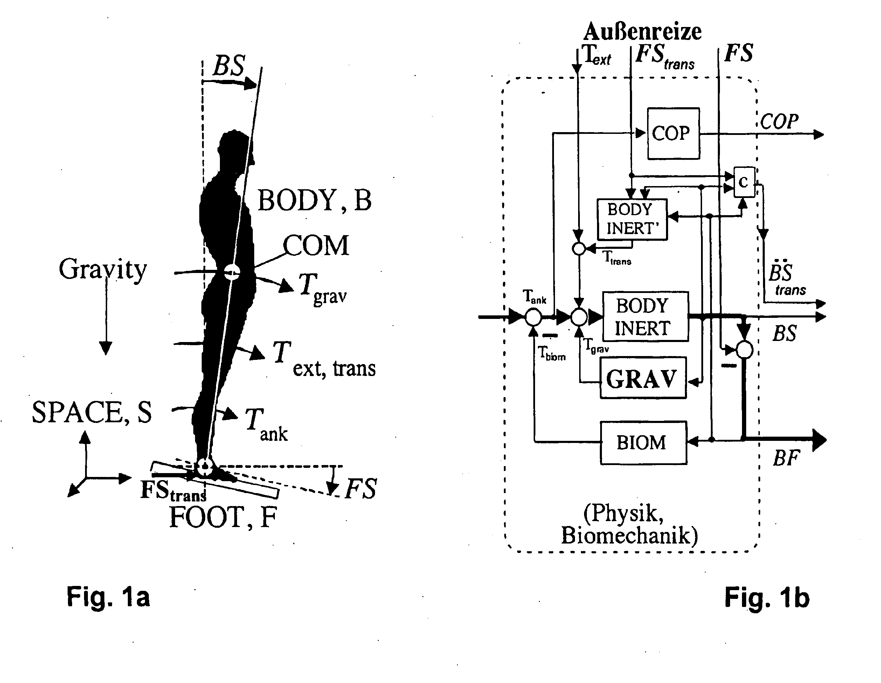

- Abb. 1a: Die hier betrachtete räumliche Bewegung eines humanoiden Roboters
- Abb. 1 b: Blockschema zur Mechanik seiner Bewegung,
- Abb. 1c: Gesamtschaltbild der Regelung des humanoiden Roboters und
- Abb. 2: Photographische Darstellung des realisierten humanoiden Roboters mit Gleichgewichtskontrolle

### Wege zur Ausführung der Erfindung, gewerbliche Verwendbarkeit

Bevor die Signalverarbeitung zur Gleichgewichtskontrolle beschrieben wird, soll zunächst das Wirkungsgefüge der äußeren Reize, d.h. die Physik und Biomechanik dargelegt werden, da es das Prinzip der vorgeschlagenen Lösung ist, dass in der Sensor-Auswertungseinheit interne Schätzungen dieser äußeren Reiz erstellt werden. Die Darlegungen erfolgen anhand der Abbildungen 1a-c.

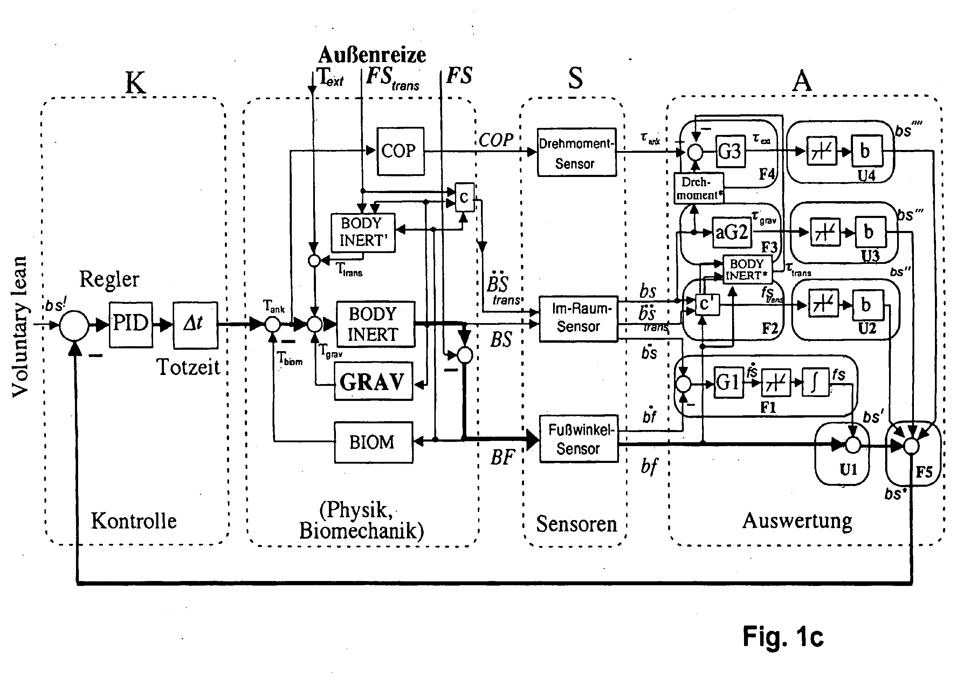

Die Abbildung 1 c zeigt ein Blockschaltbild der hier vorgeschlagenen Gleichgewichtsregelung sowie Erläuterungen zu diesem Blockschaltbild anhand der Abbildungen 1 a, b.

Beispielhaft betrachtet wird unter Bezugnahme auf Abbildung 1a ein menschenähnlicher Roboter, hier unter vereinfachender Annahme mit einem in der Form stabilen Körper (inklusive eines möglichen Kopfes, Rumpfes und von Beinen), der annähernd aufrecht steht. Der Körper (Body, B) ist über ein Gelenk mit einer Fußstruktur (Foot, F) verbunden und drückt diese durch sein Gewicht fest auf eine Körperunterstützungsfläche, die bewegt werden kann. Betrachtet werden nur kleine Winkelauslenkungen des Körpers im Raum (BS, S= Space) und der Unterstützungsfläche (ein Maß dafür ist der Winkel FS) in der sagittalen Ebene des Roboters, wobei beispielhaft alle durchgeführten Drehungen um die Achse des Gelenkes erfolgen. Die Unterstützungsfläche sei hier um einen Betrag von FS nach vorn-unten gekippt. Der Körper sei um einen Betrag von BS nach vorn gelehnt, wodurch der Körper-Schwerpunkt (COM) durch die Gravitation entsprechend der Beziehung m*g*h*sin(BS) nach vorne gezogen wird (m= COM-Masse; h= COM-Höhe über Gelenkachse; g= Erdgravitation, 9,81 m/s²) und im Gelenk ein Drehmoment T_{grav} erzeugt.

Passive viskos-elastische Elemente im Gelenkbereich erzeugen ein Drehmoment T_{biom} entgegen BF (Abb. 1 b). In Abb. 1 a gibt die Richtung der Pfeile das positive Richtungsvorzeichen aller Drehmomente an. Durch einen Aktuator (hier nicht gezeigt) wird, modifiziert durch T_{biom}, ein Drehmoment im Gelenk erzeugt, Tank. Ferner kann eine externe Kontaktkraft gegen den Körper drücken oder an ihm ziehen und bei geschlossener Regelschleife im Gelenk ein Drehmoment erzeugen (Text). Ein weiteres Drehmoment, Tₜᵣₐₙₛ, kommt durch Massenträgheit des Körpers bei Translation des Fusses bzw. seiner Unterstützungsfläche (FSₜᵣₐₙₛ) proportional zur Beschleunigung hinzu, hier beispielhaft für eine horizontale Translation gezeigt. Insgesamt kann das betrachtete physikalisch-biomechanische Szenarium modellhaft als "umgekehrtes Pendel" mit externen Störungen durch Kraftfeld (Gravitation), Bewegung der Unterstützungsfläche und Kontaktkraft aufgefaßt werden.

Das Wirkungsgefüge der in Abb. 1 a genannten Drehmomente und Winkelauslenkungen ist in Abb. 1 b als Blockschaltbild gezeigt. Als Eingänge in diesen Block diene das vom Aktuator im Gelenk erzeugte Drehmoment (führt zu Tank), ferner dienen als Eingänge und Außenreize das Drehmoment Text sowie die Kippung des Fußes im Raum FS durch Kippung der Bodenunterstützungsfläche und entsprechend seine Translation, FSₜᵣₐₙₛ. Innerhalb des Wirkungsgefüges entsteht als weiterer Außenreiz T_{grav}. Als Ausgang resultiert eine Winkelauslenkung des Körpers im Raum, BS, die Translationsbeschleunigung des Körpers im Raum (B^{••}Sₜᵣₐₙₛ), ferner eine Winkelauslenkung des Körpers relativ zum Fuß, BF, und schließlich eine Verschiebung des COP (center of pressure) unter der Fußsohle (diese vier Ausgänge dienen im Folgenden als Eingänge für die drei Sensoren).

Im Block "COP" gemäß Abbildung 1 b erfolgt die Umformung von Tₐₙₖ in eine sagittale Verschiebung des COP in der Ebene des Fußes. Im Block "GRAV" erfolgt die o.g. Umformung von BS in ein Gelenk-Drehmoment. Im Block "BIOM" erfolgt die Umformung von BF in das "passive" Drehmoment T_{biom} (T_{biom}= Kₚₐₛ * BF + Bₚₐₛ * d BF/dt; Kₚₐₛ = Steifheit, Bₚₐₛ = Dämpfung). Im Block "BODY INERT" erfolgt die Umformung des resultierenden Gesamt-Drehmoments in die Winkelauslenkungen des Körpers im Raum BS (entsprechend T/J= d²BS/dt²; T, Gesamt-Drehmoment; J, Massenträgheitsmoment des Körpers bezogen auf das Gelenk). Im Block "BODY INERT'" erfolgt unter Zuhilfenahme von BS, BF und Wissen über Massenträgheit etc. eine Umformung von FSₜᵣₐₙₛ in das Drehmoment Tₜᵣₐₙₛ und im Block "C" eine Transformation von FSₜᵣₐₙₛ in das B^{••}Sₜᵣₐₙₛ-S_{ignal} in Körperkoordinaten.

In Abbildung 1 c ist ein Gesamtblockschaltbild der Gleichgewichtsregelung des "umgekehrten Pendel"-Modells dargestellt. Das unter b beschriebene Blockschaltbild des physikalisch/biomechanischen Wirkungsgefüges ist um ein weiteres Schaltbild für die Sensoren (S), eines für die Auswertung der Sensorsignale (A) und eines für die Kontrolle (K) ergänzt.

Im Sensor-Schaltbild S wird das COP-Signal (Center of Pressur) durch ein Körper-zu-Fuß-Drehmoment-Sensorsystem ("Drehmoment-Sensor") gemessen. Die Drehmoment-Information, τₐₙₖ, wird hier also aus einer Messung der COP-Verschiebung unter der Fußsohle extrahiert, wobei diese mittels Kraftsensoren unter jedem Vorfuß und der Ferse ermittelt wird. Der Körperwinkel im Raum, BS, und die Körpertranslationsbeschleunigung wird mittels eines Körper-im-Raum-Sensorsystems gemessen ("Im-Raum-Sensor") und liefert den Körperwinkel relativ zum Schwerkraftvektor bs, die Körperwinkelgeschwindigkeit b^{•}s sowie die Translationsbeschleunigung b^{••}sₜᵣₐₙₛ. Dem liegen im beispielhaft angegebenen Roboter Fusionen von Gyrometersignalen und Accelerometersignalen zugrunde, wie sie in einer Arbeit von Mergner, T., und Glasauer, S. (1999; A simple model of vestibular canal-otolith signal fusion. Ann New York Acad Sci 871: 430-434) angegeben werden. Der Körperwinkel relativ zum Fuß, BF, wird mittels eines Körper-zu-Fuß-Sensorsystems gemessen ("Fußwinkel-Sensor") und liefert den Körperwinkel relativ zum Fuß bf und die Körperwinkelgeschwindigkeit relativ zum Fuß b^{•}f.

Im Schaltbild für die Auswertung der Sensorsignale (A) werden aus diesen Signalen interne Schätzungen der externen Reize erstellt. Es handelt sich um die Schätzung fs für den durch Plattformkippung erzeugten Winkel FS, die Schätzung fsₜᵣₐₙₛ für die Plattformtranslation sowie die Schätzungen τₑₓₜ und τ_{grav} für Text und T_{grav} (die Berechnungen werden später beschrieben). Die beiden Drehmoment-Schätzungen und fsₜᵣₐₙₛ erfahren Umformungen in "Im-Raum"-Winkeläquivalente (bs" - bs""), d.h. in Schätzwerte für COM-Winkel im Raum, die für sich entsprechende Drehmomente erzeugen würden. Das fs-Signal wird mit dem bf-Signal summiert und ergibt fs + bf = bs' (in Umformungseinheit U1), wodurch ein Signal mit gleicher Dimension wie bs"-bs"" entsteht. Eine andere, mehr didaktische Sichtweise ist, fs als ein Sollwertsignal für eine bf-Rückkopplungsschleife (durch Strichdicke hervorgehoben) anzusehen, die als solche primär den Körper-zu-Fuß-Winkel stabilisiert, durch das fs-Signal jedoch zu einer Körper-im-Raum-Stabilisierung aufgewertet wird. Es handelt sich dabei um eine Koordinatentransformation des Körpers von Fuß- in Raum-Koordinaten, wobei im hier betrachteten speziellen Fall die Rotationen BS und BF ko-planar sind, was die Transformation zu einer Vektorsummation vereinfacht. Bei stationärer Unterstützungsfläche, d.h. FS= 0° und fs= 0°, wird bs' vollständig durch den Fußwinkel-Sensor bestimmt. Dagegen wird bs' bei bewegter Unterstützungsfläche überwiegend durch das b^{•}s-Signal vom Im-Raum-Sensor bestimmt, da sich dann die b^{•}f- und bf-Signale vom Fußwinkel-Sensor gegenseitig weitgehend auslöschen. Dies bedeutet, dass hier eine implizite Sensorwichtung aus der Sensorfusion resultiert. Die Signale bs'- bs"" werden zu einem Signal bs* fusioniert, das an die Kontrolleinheit (K) geschickt wird.

Im Schaltbild der Kontrolleinheit (K) besteht ein Eingang in der Führungsgröße "Voluntary lean", die die vom Roboter gewünschte Körperposition und -bewegung im Raum bestimmt, wobei das entsprechende Signal bs^{!} so durch Voreinstellung begrenzt sei, dass der COP im statischen und dynamischen Fall innerhalb bestimmter Bereiche der Fußfläche bleibt (ein Aspekt, auf den hier nicht weiter eingegangen wird). Ein weiteres Eingangssignal der Kontrolleinheit ist bs*, das negativ rückgekoppelt wird und somit als Maß für die Abweichung von der gewünschten Körperposition anzusehen ist. Die Differenz beider Eingangssignale, der so genannte "Regelfehler", wird in den bereits erwähnten PID-Regler eingespeist und die so entstehende Stellgröße wird nach Passieren einer Totzeit (Δt; hier verwendet, um bei Software-Simulationen des Roboters die insgesamt entstehenden Totzeiten zu berücksichtigen) an den Aktuator zur Drehmoment-Erzeugung im Gelenk weitergegeben.

Der Aktuator wird, abgesehen von einer relativ geringen Totzeit, als annähernd ideal für die hier betrachteten Körperbewegungen angenommen. Er ist daher nicht gezeigt. Die passiven viskos-elastischen Rückstellkräfte im Aktuator und Gelenk (Block BIOM) werden als gering betrachtet und hier nicht weiter berücksichtigt.

Im Auswertungs-Schaltbild A erfolgt die interne Schätzung τₑₓₜ aus dem Signal τₐₙₖ des Drehmoment-Sensors durch Hinzunahme des Blocks 'Drehmoment*'. Dieser Block beinhaltet ein aus dem bs-Signal abgeleitetes inverses dynamisches Modell des Körpers und seines Gravitationseffektes (in der Form J*d²bs/dt² - mgh*sin(bs)), von dessen Ausgang τₐₙₖ subtrahiert wird. Weiterhin wird bei der Schätzung von τₑₓₜ berücksichtigt, ob eine Fußtranslation zu einem weiteren Drehmoment Tₜᵣₐₙₛ geführt hat; dies erfolgt mit einem internen Vorhersagesignal τₜᵣₐₙₛ, das aus den Signalen b^{••}Sₜᵣₐₙₛ, bs und bf sowie internem Wissen über Massenträgheit etc. gewonnen wird (Block'BODY INERT*'). Nicht dargestellt ist eine Tiefpassfilterung der an der Fusion beteiligten Signale, die vermeidet, dass bei nicht vollständigem Abgleich des Beschleunigungsanteils (J*d²bs/dt²) eine positive Rückführung auftritt. Nach Modifikation durch einen Verstärkungsfaktor (Block 'G3') wird mittels einer Umformung (Faktor in Block 'b' von U4) nach Passieren einer Entdeckungsschwelle (Schwellensymbol) ein bs-Äquivalent gebildet, das Signal bs"".

Der Im-Raum-Sensor liefert das bs-Signal, das nach interner Berechnung (Block 'aG2') die Schätzung τ_{grav} liefert, die wie bei τₑₓₜ in einer Umformungseinheit (U3) in ein bs-Äquivalent umgewandelt wird, bs'". Der Im-Raum-Sensor liefert zudem ein Maß für die Körper-Winkelgeschwindigkeit im Raum, b^{•}s, das nach Verrechnung mit dem entsprechenden Signal aus dem Fußwinkel-Sensor, b^{•}f, und Verstärkung (Block 'G1') ein Maß für die Winkelgeschwindigkeit des Fußes im Raum, fs, und weiterhin nach Passieren einer Schwelle und einer mathematischen Integration (Integrationszeichen) die bereits erwähnte Schätzung fs ergibt. Der Im-Raum-Sensor liefert schließlich die Körpertranslationsbeschleunigung b^{••}sₜᵣₐₙₛ, die unter Zuhilfenahme der Signale bs und bf in eine Schätzung der Fußtranslation fsₜᵣₐₙₛ überführt wird (Block 'C"), worauf dann eine Umformung (U2) in ein weiteres bs-Äquivalent erfolgt, bs".

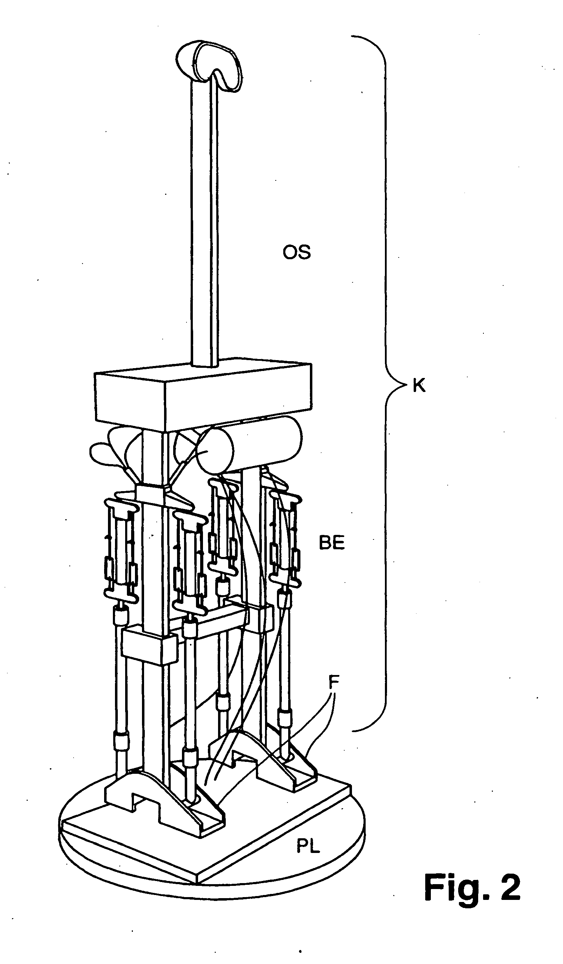

Das in den Abbildungen 1 a bis c dargestellte Wirkungsgefüge wurde bereits in Form eines Roboters als Ausführungsbeispiel realisiert und überprüft, siehe fotographische Darstellung in Abb. 2. Der Körper ist lediglich als Oberkörperstruktur (OS) in Form einer vertikalen Stange mit zwei horizontalen Bleigewichten, zusammen ca. 80 kg, auf einer "Hüfte" realisiert, die mit zwei Beinen (BE) fest verbunden ist. An den unteren Enden der Beine befinden sich jeweils Gelenke und Fußstrukturen (F). Mit den Füßen steht er frei auf einer Bewegungsplattform (PL), die um die Achse durch die beiden Gelenke gekippt werden kann. Drehmoment in den Gelenken wird mittels jeweils zwei antagonistischer Paare von pneumatischen Aktuatoren erzeugt. Der Roboter trägt die o.g. drei Sensorsysteme (mit elektronisch erzeugten Analogsignalen). Die Auswertung und Überführung dieser Signale in die Stellgröße erfolgt in der in Abb. 1 angegebenen Weise mit Hilfe einer (digitalen) Computer-Simulationssoftware in einem sog. "Embedded PC" mit analogen Ein- und Ausgängen (unter externer Supervision eines sog. "Host PC"). Die Ausgabe erfolgt wieder als analoges Signal an die drehmomentgeregelten pneumatischen Aktuatoren.

Zunächst ohne externen Kontaktkraftreiz und Bewegung der Unterstützungsfläche getestet ließ sich bei dem Roboter eine gute Standstabilität erreichen bei intern generierten Bewegungen (über das Signal bs^{!}) mit einer relativ geringen Regelverstärkung entsprechend einem Drehmoment etwas über dem Wert von m*g*h, so daß τ_{grav} kompensiert war. Bei Hinzunahme von Kontaktkraftreizen und Bewegungen der Unterstützungsfläche wurden Änderungen dieser Reize wie auch Superpositionen dieser Reize toleriert. Dabei wurde eine Totzeit von 140 ms noch gut toleriert.

Die Gleichgewichtskontrolle ist bei dem beschriebenen zweibeinigen Roboter auch dann wirksam, wenn die Bewegungen neben der sagittalen Ebene auch die frontale und horizontale Ebene betreffen. Dazu ist erforderlich, dass die drei Sensoren und die internen Schätzungen fs, fsₜᵣₐₙₛ, τₑₓₜ und τ_{grav} sowie das bf Signal auch für diese Ebenen gelten, soweit sinnvoll. Wie am Beispiel der Interaktion zwischen den Signalen fs und bf bereits hingewiesen wurde können anstelle der Summationen dann Verrechnungsuntereinheiten für Koordinatentransformationen notwendig werden. Ansonsten können die Pfade in Abb. 1 c mehrheitlich als Leitungen für 3D-Signale (x,y,z) angenommen werden.

Die Gleichgewichtskontrolle bei dem beschriebenen zweibeinigen Roboter ist auch dann erfolgreich, wenn eine Fuß-Translation erfolgt, ohne dass intern wie in Abb. 1c ein Schätzwert fsₜᵣₐₙₛ gebildet wird. Der Grund ist, dass dann das Drehmoment Tₜᵣₐₙₛ mit in die Schätzung τₑₓₜ eingeht (dort nicht durch τₜᵣₐₙₛ beseitigt wird) und somit kompensiert wird. Dann ist der Schätzwert τₑₓₜ als solcher zwar nicht mehr richtig, das Gleichgewicht ist dadurch aber nicht unmittelbar betroffen, was ein Beispiel für die Robustheit des Kontrollmechanismus ist (weitere Beispiele werden weiter unten dargestellt).

Die Gleichgewichtskontrolle ist auch bei zweibeinigen Robotern mit mehr als den zwei Segmenten des oben beschriebenen Exemplars wirksam. Beispielsweise kann man annehmen, dass der Körper aus "Rumpfteil" und einem relativ dazu bewegbarem "Kopfteil" besteht und der COM im Rumpf lokalisiert ist, während der Im-Raum-Sensor im Kopf lokalisiert ist, wie es z.B. beim Menschen in Form des Vestibularissystems im Innenohr der Fall ist. Zusätzlich erforderlich ist dann lediglich die Messung der intersegmentalen (Kopf-zu-Rumpf) Winkelauslenkung; dies erlaubt eine Koordinatentransformation der Im-Raum-Signale auf den COM im Rumpf (bei der Ermittlung von τ_{grav} notwendig) oder mittels bf-Signal weiter auf das Fußsegment.

Durch die internen Repräsentationen der externen Reize ist gegeben, dass sie in direkter Weise gespeichert, gelernt, verglichen oder/und kommuniziert werden können. Auch können auf einfache Weise Informationen über die Außenreize aus zusätzlichen Sensoren mit den hier als Default-Größen dienenden fusioniert werden. Werden die Signale, die die zusätzliche Information über die Außenreize enthalten, mit den bereits dargestellten Schätzungen fusioniert, so bestimmt der entsprechende neue Schätzwert die Regelung, wodurch die zusätzlichen Informationen in die Regelung eingebunden werden. Beispielsweise kann der Roboter eine Bewegung in ihrer Kinematik planen und daraus die Gravitations-(allg. Kraftfeld-)Effekte vorhersagen, was zu einem erwarteten τ_{grav} führt, das mit dem sensormäßigen τ_{grav} fusioniert werden kann. Prädiktionen bzw. Voreinstellungen können beispielsweise auch aus Kommunikation, Speichern oder Schlussfolgerungen stammen. Weiterhin können noch nicht erwähnte Sensoren dazu beitragen. Beispielsweise kann der Roboter mittels eines visuellen Sensors ein Maß für seine Vertikalität im (visuellen) Raum erhalten und, wenn er Gründe für die Annahme hat, dass die visuelle Szene stationär ist, dann ein Signal analog dem τ_{grav} erstellen, was dieses ersetzt. Oder/und er erstellt in diesem Fall ein visuelles Signal über die Relativgeschwindigkeit zwischen Körper und Szene und verwendet dies anstelle von b^{•}s.

Ein Vorteil der vorgeschlagenen Lösung ist, dass sie auch relativ robust gegenüber internen Störungen ist. Würde beispielsweise der Im-Raum-Sensor des Roboters eine geringe Störung aufweisen, so würde dies die Stabilität nicht übermäßig beeinträchtigen. Würde der Im-Raum-Sensor eine starke Störung aufweisen und der Roboter dies detektieren (durch Vergleich mit den anderen Sensor-Informationen in Situationen, in denen diese äquivalent sind) und die betroffenen Signale sperren bzw. ersetzen, so würden die verbleibenden Mechanismen die Gleichgewichtsregulation weiterhin gewährleisten, wie später in diesem Text dargestellt wird.

Inertialmesssysteme, verwendet als Im-Raum-Sensoren, in Form von klassischen Gyroskopen sind relativ teuer und groß, insbesondere wenn sie über längere Zeit genaue Werte liefern sollen. In dem hier vorgeschlagenen Gleichgewichtskontrollsystem können sie durch preiswertere und kleinere Inertialmesssysteme, die unter Verwendung von massengefertigten Gyrometern (Winkelgeschwindigkeits-Sensoren) und linearen Beschleunigungsaufnehmern konstruiert werden können, ersetzt werden, auch wenn diese nicht so genaue und weniger stabile Werte liefern. So weisen derartige Gyrometer beispielsweise ein sog. 1/f-Rauschen auf, d.h. starke spontane Signalfluktuationen im tiefen Frequenzbereich. Bei ihrer Verwendung kann die Genauigkeit der Regelung insofern gesteigert werden, wenn zwischenzeitlich der Roboter "erkennt", sich "erinnert", oder "mitgeteilt" bekommt, dass die Bodenunterstützungsfläche oder die visuelle Szene stationär ist; er kann dann die Messwerte vom Im-Raum-Sensor durch entsprechende Messwerte vom Winkel-Sensor bzw. einem visuellen Sensor ersetzen.

Sensorwichtungen zur Minimierung der Verwendung der Im-Raum-Messwerte sind implizit im Auswertungsteil des vorgestellten Roboters in so weit bereits enthalten, als sie sich bei stationärer Unterstützungsfläche b^{•}s und b^{•}f gegenseitig aufheben und die durch b^{•}s eingeführten Signalfluktuationen mittels Schwelle weitgehend beseitigt werden. Wie oben bereits dargestellt wird die Schätzung fs dabei gleich 0°, so dass der Im-Raum-Sensor dann nicht mehr am Signal bs' beteiligt ist. Außerdem stehen den tieffrequenten Signalfluktuationen in der Schätzung τ_{grav} die gleichen Fluktuationen mit ähnlicher Amplitude, aber entgegen gesetztem Vorzeichen in der Schätzung τₑₓₜ gegenüber (über den Block 'Drehmoment*'), so dass sie sich in der nachfolgenden Summation von bs'" und bs"" im Hauptschätzwert bs* weitgehend aufheben, wie im Weiteren dargestellt wird.

Die Anwendung der vorgeschlagenen Lösung für das Gleichgewichtssystem von zweibeinigen Robotern liegt dort, wo die Industrie beispielsweise menschenähnliche (humanoide) Roboter einplant, wie im Haushalt und in Bereichen, wo ein Mensch aus verschiedensten Gründen (Ansteckungsgefahr, Kosten, Compliance, etc.) menschenähnlich ersetzt werden soll.

Die vorgeschlagene Lösung für das Gleichgewichtssystem von zweibeinigen Robotern wurde inspiriert durch Untersuchungen des Gleichgewichtssystems beim Menschen, dem es nachempfunden wurde. Dies macht es zu einem Werkzeug der medizintechnischen Entwicklung und medizinischen Forschung. Medizintechnische Anwendungen sind beispielsweise Roboter ausgebildet in Form von Neuronalen Prothesen, Exoskeletten oder Orthesen, die eine Rehabilitation unterstützen oder als medizinische Hilfsmittel direkt verwendet werden (wobei die "menschenähnliche" Funktionsweise eine wichtige Hilfe für die Akzeptanz durch den Patienten ist). In der medizinischen Forschung können sie für sog. biorobotische Untersuchungsmethoden eingesetzt werden, wobei beispielsweise bei Patienten durch Parameter-Identifikation eine Störung in der sensomotorischen Stand-Kontrolle vermutet wird. Dann wird diese Störung im Roboter implementiert und es werden zum Vergleich die gleichen Messungen wie beim Patienten vorgenommen (z.B. auf einer Bewegungsplattform), dies im iterativen Wechselspiel zwischen Patient und Roboter, bis im Roboterverhalten Ähnlichkeit erzeugt ist und somit eine formalisierte Hypothese zur Symptomatik erreicht ist. Entsprechend kann eine Symptombesserung unter Therapie trotz hoher Komplexität der sensomotorischen Kontrolle "verstehbar" gemacht werden, und die Methode kann für Therapie-Design eingesetzt werden. Die Verwendung des Roboters in dieser Weise entspricht weitgehend einer HIL- (hardware-in-the-loop-) Simulation (vgl. oben, Realisierung des Roboters).

## Patentansprüche

1. Haltungs- und Bewegungskontrollsystem für einen zweibeinigen, humanoidartig ausgebildeten Roboter, der über eine Körperstruktur sowie zwei mit der Körperstruktur verbundene Stand- und Gehstrukturen verfügt, im Weiteren als Beine bezeichnet, mit einem gemeinsamem Massenschwerpunkt, im Weiteren als Körper bezeichnet, sowie über jeweils eine mit jeweils einem Bein über ein Gelenk um mindestens eine Achse drehbar verbundene Fußstruktur, im Weiteren als Fuß bezeichnet, der jeweils auf einer Unterstützungsfläche aufliegt, wobei mindestens ein Fuß mittels mindestens eines Aktuators schwenkbar ist,
**dadurch gekennzeichnet,**
**dass** an wenigstens einem Fuß wenigstens ein Gelenkwinkelmess-System, im Weiteren als Fußwinkelsensor bezeichnet, vorgesehen ist, das einen Körper-zu-Fuß-Winkel (bf) sowie eine diesbezügliche Winkelgeschwindigkeit (b^{·}f) erfasst,
**dass** im Bereich der Körperstruktur mindestens ein Gravitoinertial-Sensorsystem zur Erfassung von Körper-Bewegungen in mindestens einer Translationsebene und um mindestens eine Rotationsachse im Raum vorgesehen ist, im Weiteren als Im-Raum-Sensor bezeichnet, durch das eine Translationbeschleunigung des Körpers im Raum (b^{··}sₜᵣₐₙₛ) sowie seine Rotationgeschwindigkeit (b^{·}s) und sein Winkel zum Gravitationsvektor (bs) erfassbar sind,
**dass** ein Körper-zu-Fuß-Drehmoment-Sensorsystem, im Weiteren als Drehmoment-Sensor bezeichnet, vorgesehen ist, das direkt oder indirekt das zwischen Körper und Füßen wirkende Drehmoment (τₐₙₖ) erfasst,
**dass** eine Auswerteeinheit (A) vorgesehen ist, in der jeweils Signale für die Körper-zu-Fuß-Bewegung (bf,b^{·}f), für die Körper-Translation (b^{··}sₜᵣₐₙₛ) und -Rotation (bs, b^{·}s) sowie für das Körper-zu-Fuß-Drehmoment (τₐₙₖ) Fusionen erfahren zum Erhalt mindestens einer internen Schätzung für von außen auf den Roboter einwirkenden Kräfte und Lageänderungen seiner Unterstützungsfläche, im Weiteren als Außenreize bezeichnet, und in der die Schätzungen in weiteren Fusionen zu einem Hauptschätzwert (bs*) zusammengerührt werden, wodurch die Sensorbeiträge zu bs* eine Umwichtung in Abhängigkeit von den Außenreizen erfahren sowie das Auftreten der Außenreize die Größe von bs* anpasst, und
**dass** eine Kontrolleinheit vorgesehen ist, die unter Zugrundelegung des Hauptschätzwertes (bs*) Regelungssignale generiert, die zur Aktuator-Ansteuerung dienen, so dass eine vorgebbare Haltung oder Bewegung des Roboters trotz der Außenreize realisierbar ist.

2. Haltungs- und Bewegungskontrollsystem nach Anspruch 1,
**dadurch gekennzeichnet, dass** das Haltungs- und Bewegungskontrollsystem der Erhaltung des Gleichgewichtes des Roboters dient.

3. Haltungs- und Bewegungskontrollsystem nach Anspruch 1 oder 2,
**dadurch gekennzeichnet, dass** die Auswerteeinheit eine erste Schätzwerteinheit (F1) beinhaltet, in der durch Fusion von Signalen des Fußwinkel-Sensors und des Im-Raum-Sensors ein erster Schätzwert (fs) bestimmt wird, der die Haltung und Bewegung von jeweils zumindest einem Fuß in drei Rotationsebenen des Raums repräsentiert, und diese Werte auch für die Unterstützungsfläche gelten, solange der Fuß kraftschlüssig aufliegt.

4. Haltungs- und Bewegungskontrollsystem nach Anspruch 3,
**dadurch gekennzeichnet, dass** die erste Schätzwerteinheit (F1) eine Sensorsignalfusion im Sinne einer Koordinatentransformation des vom. Im-Raum-Sensor stammenden Signals b^{·}s mit Hilfe des vom Fußwinkel-Sensor stammenden Signals b^{·}f vornimmt zum Erhalt eines Schätzwertes fs für den Kippwinkel des Fußes und seiner Unterstützungsfläche im Raum, und
dass nachfolgend eine Umwandlungseinheit U1 vorgesehen ist, in der der Schätzwert fs mit Hilfe des Körper-zu-Fuß-Winkels (bf) eine Transformation in ein Maß für den Körper-Kippwinkel im Raum (bs') erfährt.

5. Haltungs- und Bewegungskontrollsystem nach Anspruch 4,
**dadurch gekennzeichnet, dass** der Wert bs', der von dem Schätzwert für den Kippwinkel des Fußes im Raum fs abhängt, nicht nur Fuß-Kippung durch Kippung der Fuß-Unterstützungsfläche im Raum beinhaltet, sondern auch Fuß-Kippung durch nachgebende oder unebene Unterstützungsfläche.

6. Haltungs- und Bewegungskontrollsystem nach einem der Ansprüche 1 bis 5,
**dadurch gekennzeichnet, dass** die Auswerteeinheit eine zweite Schätzwertbildungseinheit (F2) umfasst, in der durch Fusion von verschiedenen Signalen des Im-Raum-Sensors und unter Einbeziehung des Fuß-Winkels (bf) ein zweiter Schätzwert (fsₜᵣₐₙₛ) bestimmt wird, der die Translation zumindest eines Fußes in den drei Ebenen des Raums repräsentiert, und dieser Wert auch für die Unterstützungsfläche gilt, solange der Fuß kraftschlüssig aufliegt.

7. Haltungs- und Bewegungskontrollsystem nach Anspruch 6,
**dadurch gekennzeichnet, dass** ausgehend von der zweiten Schätzwerteinheit (F2), die der Bildung des Schätzwertes fsₜᵣₐₙₛ dient, mittels einer Vorhersageeinheit (Block BODY INERT*) ein Maß für das durch die Translation ausgelöste Drehmoment im Fußgelenk (τₜᵣₐₙₛ) erstellt wird, und
dass sich an die Schätzwerteinheit (F2) eine Umformungeinheit (U2) anschließt, in der ein Äquivalent für den Körper-Kippwinkel im Raum (bs") gebildet wird.

8. Haltungs- und Bewegungskontrollsystem nach einem der Ansprüche 1 bis 7,
**dadurch gekennzeichnet, dass** die Auswerteeinheit eine dritte Schätzwerteinheit (F3) beinhaltet, in der auf der Grundlage von Signalen des Im-Raum-Sensors sowie auf Grundlage internen Wissens über die Massenträgheit des Körpers mit Bezug auf das Fußgelenk, die Höhe des Massenschwerpunktes über dem Gelenk sowie der Größe der Erdgravitation ein zweiter Schätzwert bezüglich eines durch die Gravitation hervorgerufenen Gelenkdrehmoments im Gelenk (τ_{grav}) erstellt wird, und dass in einer nachfolgenden dritten. Umformungeinheit (U3) ein Äquivalent für τ_{grav} in Form eines Körper-Kippwinkelwertes im Raum (bs"') gebildet wird.

9. Haltungs- und Bewegungskontrollsystem nach einem der Ansprüche 1 bis 8,
**dadurch gekennzeichnet, dass** die Auswerteeinheit eine vierte Schätzwerteinheit (F4) umfasst, in der auf der Grundlage von Signalen des Drehmoment-Sensors (τₐₙₖ) ein vierter Schätzwert (τₑₓₜ) ermittelt wird, der einem Gelenkdrehmoment entspricht, das durch Kontaktkräfte außen am Körper in Form von Druck gegen den Körper oder Zug an ihm sowie externer Gewichte oder ihre Umverteilung am Körper verursacht wird, und
dass in einer nachfolgenden vierten Umformungeinheit (U4) ein Äquivalent für τₑₓₜ in Form eines Körper-Kippwinkelwertes im Raum (bs"") gebildet wird.

10. Haltungs- und Bewegungskontrollsystem nach Anspruch 9,
**dadurch gekennzeichnet, dass** in der vierten Schätzwerteinheit (F4) vor Erstellung des vierten Schätzwertes (τₑₓₜ) das Signal des Drehmoment-Sensors (τₐₙₖ) von Komponenten befreit wird, die außen durch den Gravitationseffekt des Körpers und aktiven Aktuatorkräften bedingt sind und intern vorhergesagbar sind, wobei diese Vorhersagen aus dem Signal des Im-Raum-Sensors (bs) in einer Verarbeitungeinheit (Drehmoment*) erfolgen, und
dass eine Drehmomentkomponente des Signals des Drehmoment-Sensors (τₐₙₖ) entfernt wird, die außen durch Translation der Unterstützungsfläche entsteht, dies zumindest in soweit wie sie sich in der entsprechenden Schätzung (τₜᵣₐₙₛ) der Schätzwerteinheit (F2) niederschlägt.

11. Haltungs- und Bewegungskontrollsystem nach Anspruch 9 oder 10,
**dadurch gekennzeichnet, dass** die Auswerteeinheit eine fünfte Signalfusioneinheit (F5) vorsieht, die die vier Signale bs', bs", bs'" und bs"" aus den Schätzwerteinheiten (F1 - F4) und den jeweils nachfolgenden Umformeinheiten (U1 - U4) zu einem Hauptschätzwert (bs*) derart zusammenführt, dass sie sich gegenseitig beeinflussen und es in Abhängigkeit von den Außenreizen einerseits zu Umwichtungen der Sensorbeiträge zum Hauptschätzwert (bs*) kommt und anderseits die Größe von bs* an das Auftreten der Außenreizen angepaßt wird.

12. Verfahren zur Haltungs- und Bewegungskontrolle, insbesondere zur Gleichgewichtskontrolle, eines zweibeinigen, humanoiden Roboters, der über eine Körperstruktur sowie zwei mit der Körperstruktur verbundene Standund Gehstrukturen verfügt, im Weiteren als Beine bezeichnet, mit einem gemeinsamem Massenschwerpunkt, im Weiteren als Körper bezeichnet, sowie über jeweils eine mit jeweils einem Bein über ein Gelenk um mindestens eine Achse drehbar verbundene Fußstruktur, im Weiteren als Fuß bezeichnet, der jeweils auf einer Unterstützungsfläche aufliegt, wobei mindestens ein Fuß mittels mindestens eines Aktuators schwenkbar ist,
**gekennzeichnet, durch** folgende Verfahrensschritte:
- Sensormäßige Erfassung eines Körper-zu-Fuß-Winkels (bf) und seine Winkelgeschwindigkeit (b^{·}f) am Gelenk,
- Sensormäßige Erfassung von Kippungen sowie Linear-Beschleunigungen des Körpers im Raum zur Ermittlung von Rotations-Winkel (bs) und - Winkelgeschwindigkeit (b^{·}s) sowie Trarislationsbeschleunigung (b^{··}sₜᵣₐₙₛ),
- Sensormäßige Erfassung eines Drehmoments (τₐₙₖ) zwischen Körper und Füßen,
- Erstellung von internen Schätzwerten für äußere Kräfte und Lageveränderungen der Unterstützungsfläche, auf der die Füße des Roboters aufliegen, die sein Gleichgewicht gefährden können, im Weiteren als Außenreize bezeichnet, **durch** Sensorsignalfusionen,
- Erstellung eines Hauptschätzwertes (bs*) **durch** eine weitere Fusion in Form einer Zusammenführung der Außenreiz-Schätzwerte, wobei **durch** die Fusionen insgesamt je nach Außenreiz eine selbstständige Umwichtung der Sensorbeiträge zum Hauptschätzwert (bs*) oder eine reizbedingte und reizadäquate Anpassung in Form einer Störgrößenaufschaltung erfolgt, sowie
- Regelung der Aktuatoren auf der Grundlage eines vorgegebenen Sollwertsignals für willkürliche Körperhaltung/-bewegung mit Vergleich des Hauptschätzwertes (bs*), so dass die vorgegebene Körperhaltung und/oder - bewegung trotz der Außenreize realisiert wird und sich die Gleichgewichtskontrolle dabei bezüglich der verwendeten Sensorsignale und der Regelungsstärke an Art, Änderungen und Überlagerungen der Außenreize anpasst.

13. Verfahren nach Anspruch 12,
**dadurch gekennzeichnet, dass** die das Gleichgewicht des Roboters gefährdenden. Außenreize zum einen in Effekten von Kraftfeldern bestehen, vorzugsweise des Erdgravitationsfelds, zum zweiten in Effekten von Kontaktkräften wie Stoß gegen oder Zug am Körper oder Gewichtsänderungen und -umverteilungen am Körper sowie drittens Effekte durch Abweichungen von einer stationären, festen und ebenen Unterstützungsfläche, auf der die Füße des Roboters stehen.

14. Verfahren nach Anspruch 12 oder 13,
**dadurch gekennzeichnet, dass** das Erstellen der Schätzwerte für die Außenreize mittels Signalfusion in der folgenden Weise erfolgt:
- Signalfusion der Winkelgeschwindigkeitssignale vom Körper-zu-Fuß-Winkel (b^{·}f) mit denen der Körper-im-Raum-Rotation (b^{·}s) zum Erhalt eines ersten Schätzwertes (fs), der die Kippung des Fußes im Raum beschreibt, wobei dies auch für die Unterstützungsfläche gilt, wenn der Fuß fest auf ihr aufliegt,
- Umformung des Schätzwertes fs mit Hilfe des Körper-zu-Fuß-Winkels (bf) in eine Größe bs', die einem Körper-im-Raum-Winkel entspricht,
- Signalfusion der Signale von Körper-im-Raum-Translationsbeschleunigung (b^{··}sₜᵣₐₙₛ), Körper-im-Raum-Rotation (bs) und Körper-zu-Fuß-Winkel (bf) zum Erhalt eines zweiten Schätzwertes (fsₜᵣₐₙₛ) für die in der Außenwelt stattfindende Translation von Fuß und seiner Unterstützungsfläche im Raum,
- weitere Verwendung der Signale, die für den zweiten Schätzwert fsₜᵣₐₙₛ gebraucht werden, zusammen mit internem Wissen über die mechanischen Eigenschaften des Roboters zur Vorhersage des Gelenk-Drehmoments (τₜᵣₐₙₛ), das außen durch die Massenträgheit des Roboter-Körpers bei Translation der Unterstützungsfläche entsteht und als Hilfsgröße dient für eine später beschriebene Berechnung der vierten Schätzung (τₑₓₜ) für ein Drehmoment durch externe Kontaktkräfte,
- Umformung des zweiten Schätzwertes fsₜᵣₐₙₛ mit Hilfe einer Schwelle und eines Umformungsfaktor in eine Größe bs", die äquivalent zu einem Körper-im-Raum-Winkel ist, bei dem der Gravitationseffekt des Körpers ein Gelenkdrehmoment von der Größe von τₜᵣₐₙₛ erzeugen würde,
- Signalfusion der Signale der Körper-im-Raum-Rotation (bs) mit internem Wissen über Masse des Körpers, Höhe des Massenschwerpunktes über dem Gelenk sowie Größe der Erdgravitation zum Erhalt eines dritten Schätzwertes (τ_{grav}) für das Gelenk-Drehmoment, das durch Auslenkung des Körpers von der Vertikalen über dem Gelenk resultiert,
- weitere Verwendung der Signale, die für den dritten Schätzwert τ_{grav} gebraucht werden, zur Vorhersage der Drehmoment-Komponenten, die außen durch den Gravitationseffekt des Körpers und die aktiven Aktuatorkräfte bedingt werden (Block Drehmoment*) und als Hilfsgrößen dienen bei der später erwähnten Berechnung der vierten Schätzung (τₑₓₜ),
- Umformung des dritten Schätzwertes τ_{grav} mit Hilfe von Schwellen und Umformungsfaktoren in eine Größe bs"', die äquivalent zu einem Körper-im-Raum-Winkel ist,
- Signalfusion des Signals für das Körper-zu-Fuß-Drehmoment (τₜₐₙₖ) mit den Vorhersagen zum translationsbedingten Drehmoment (τₜᵣₐₙₛ) sowie zu den beiden Drehmomenten im Block Drehmoment*, die durch Aktuatoraktivität und Körperauslenkung im Raum entstehen, beide hier abgeleitet aus dem Im-Raum-Signal (bs), zur Erstellung einer internen vierten Schätzung (τₑₓₜ) für dasjenige Drehmoment, das von außen durch Kontaktkräfte entsteht,
- Umformung des vierten Schätzwertes τₑₓₜ mit Hilfe von Schwelle und Umformungsfaktor in eine Größe bs"", die äquivalent zu einem Körper-im-Raum-Winkel ist.

15. Verfahren nach Anspruch 14,
**dadurch gekennzeichnet, dass** überprüft wird, ob der Schätzwert (fs), der die Haltung und Bewegung von jeweils zumindest einem Fuß in den drei Rotationsebenen des Raums, repräsentiert, auch für die Unterstützungsfläche gilt, indem der Kraftschluß des Fußes mit der Unterstützungsfläche mit Hilfe von Kraftsensoren unter der Fußsohle und einem Vergleich mit einem Sollwertbereich festgestellt wird.

16. Verfahren nach Anspruch einem der Ansprüche 12 bis 15,
**dadurch gekennzeichnet, dass** eine weitere Fusion erfolgt zur Zusammenführung der aus den Außenreiz-Schätzwerten sowie dem bf-Signal gebildeten Körper-im-Raum-Signalen bs', bs", bs'" und bs"" mit Erhalt eines internen Hauptschätzwertes (bs*).

17. Verfahren nach einem der Ansprüche 14 bis 16,
**dadurch gekennzeichnet, dass** im Wege der ersten Signalfusion mit Bildung des Schätzwertes fs und nachfolgender Umformung mittels des Körper-zu-Fuß-Winkels (bf) zu dem Körper-im-Raum-Signal bs' eine Sensorwichtung erfolgt derart, dass bei stationärem Fuß durch stationäre Unterstützungsfläche der Schätzwert fs= 0° ist, so dass dann die Größe des Körper-im-Raum-Signal bs' allein durch den Körper-zu-Fuß-Winkelsensor mit dem Signal (bf) bestimmt wird, während bei bewegter Unterstützungsfläche das Signal bs' überwiegend durch den Körper-im-Raum-Winkelsensor mit dem Signal (b^{·}s) bestimmt wird, wegen weitgehender gegenseitiger Auslöschung der Signale, die von (b^{·}f) und (bf) ausgehen, in der Umformungseinheit zum bs'-Signal (U1).

18. Verfahren nach Anspruch 12 oder 13,
**dadurch gekennzeichnet, dass** im Rahmen der Fusion der Schätzwert-Signale zum Hauptschätzwert (bs*) zwei Beiträge des Im-Raum-Sensors (bs) an bs* beteiligt werden,
zum einen das bs-Signal zum dritten Schätzwert τ_{grav} und
zum anderen das bs-Signal zum Block Drehmoment*, in dem ein Vorhersagesignal zum Drehmomentbeitrag durch Körperauslenkung im Raum errechnet wird, das nach Tiefpass-Filterung und Vorzeichenumkehrung in die vierte Schätzwertbildung für τₑₓₜ einfließt, wodurch es zu einer gegenseitigen Löschung der beiden Beiträge im tiefen Frequenzbereich kommt, was den Gesamtbeitrag des Im-Raum-Sensors am Hauptschätzwerte (bs*) weiter verringert.

19. Verfahren nach einem der Ansprüche 14 bis 18,
**dadurch gekennzeichnet, dass** im Rahmen der Fusion der Schätzwert-Signale zum Hauptschätzwert (bs*) der zweite Schätzwert fsₜᵣₐₙₛ zwei Beiträge zu bs* leistet,
zum einen als einen direkten Beitrag über die Umformung (U2) in das bs"-Signal, und
zum anderen indirekt über C' als ein Beitrag mit Vorzeichenumkehr über die Vohersage τₜᵣₐₙₛ zum vierten Schätzwert τₑₓₜ und damit zu bs""
wodurch es zu einer gegenseitigen Auslöschung der beiden Beiträge kommt, was den Gesamtbeitrag des Im-Raum-Sensors am Hauptschätzwerte (bs*) weiter verringert.

20. Verfahren nach einem der Ansprüche 12 bis 19,
**dadurch gekennzeichnet, dass** in Folge des Zusammenwirkens der internen Schätzwertbildungen mit getrennten Repräsentationen der Außenreize sich eine Schleifenverstärkung der Regelung der Aktoren über den Hauptschätzwert bs* jeweils an das Auftreten bzw. das Wirksamwerden der äußeren Kraftfelder, Kontraktkräfte und Gewichtsänderungen sowie Translationen der Unterstützungsfläche auf das notwendige Maß anpasst, wodurch eine "weichen Regelung" möglich wird, durch die wiederum relativ lange Totzeiten sowie Sensor- bzw. Schätz-Ungenauigkeiten tolerierbar werden im Sinne einer besseren Robustheit des Systems.

21. Verfahren nach einem der Ansprüche 12 bis 20,
**dadurch gekennzeichnet, dass** bei Ausfall des Im-Raum-Sensors oder bei Störung der Umsetzung oder Übermittlung seiner Signale (b^{·}s, b^{··}sₜᵣₐₙₛ und /oder bs) die entsprechenden Schätzwerte (fs, fsₜᵣₐₙₛ und τ_{grav}) Null werden bzw. aktiv auf Null gesetzt werden, und dies auch für die Berechnungen in den Blöcken Drehmoment* und BODY INERTIA* gilt,
wobei das Gleichgewicht dennoch aufrechterhalten wird, wenn auch mit Einschränkung der Anpassung an die Außenreizbedingungen, was die Robustheit des Systems weiter verbessert.

22. Verfahren nach einem der Ansprüche 12 bis 21,
**dadurch gekennzeichnet, dass** bei Ausfall des Drehmoment-Sensors oder bei einer anderen Störung der Umsetzung oder Übermittlung des τₐₙₖ-Signals der Schätzwert τₑₓₜ auf Null gesetzt wird,
wobei das Gleichgewicht weiterhin aufrechterhalten wird, wenn auch mit eingeschränkter Anpassung an die Außenreizbedingungen, was die Robustheit des Systems insgesamt weiter verbessert.

23. Verfahren nach einem der Ansprüche 12 bis 22,
**dadurch gekennzeichnet, dass** bei Ausfall des Fußwinkel-Sensors oder bei einer anderen Störung der Umsetzung oder Übermittlung seiner Signale diese Null sind oder auf Null gesetzt werden,
wobei das Gleichgewicht weiterhin aufrechterhalten wird, wenn auch mit eingeschränkter Anpassung an die Außenreizbedingungen, was die Robustheit des Systems insgesamt weiter verbessert.

24. Verfahren nach den Ansprüchen 22 und 23,
**dadurch gekennzeichnet, dass** auch bei Zusarnmentreffen des Ausfalls des Fußwinkel-Sensorsystems und des Drehrnoment-Sensorsystems das Gleichgewicht weiterhin aufrechterhalten wird, wenn auch **dadurch** die Anpassung an die Außenreizbedingungen eingeschränkt ist, was die Robustheit des Systems insgesamt weiter verbessert.

25. Verfahren nach einem der Ansprüche 14 bis 24,
**dadurch gekennzeichnet, dass** in "Arbeitspausen" des Roboters der Funktionszustand der Sensoren und der Schätzfusionen überprüft wird, indem er auf stationärer Unterstützungsfläche aktive Lehnbewegungen ausführt, wobei die Schätzwertsignale τₑₓₜ, fs und fsₜᵣₐₙₛ annähernd Null sein müssen sowie bs' ≈bs"' sein muss, andernfalls ein Vergleich der Daten mit gespeicherten Tabellen, die Sperrungen von internen Signalen vorgeben, was die Robustheit des Systems insgesamt weiter verbessert.

26. Verfahren nach einem der Ansprüche 12 bis 25,
**dadurch gekennzeichnet, dass** das Drehmomentsignal τₐₙₖ vom Drehmoment-Sensor entweder aus dem COP (centre of pressure), mittels Kraftsensoren unter der Fußsohle gemessen, errechnet werden kann, oder aus Kraftsensoren in der Aktuatorbefestigung, oder aus einer Fusion beider Signale, wobei eine Schätzwertbildung von τₑₓₜ nur dann erlaubt wird, wenn nach dem bereits genannten Kriterium Kraftschluss zwischen Fuß und Unterstützungsfläche gegeben ist, was die Robustheit des Systems weiter verbessert.

## Claims

1. A holding and movement control system for a two-legged humanoid robot having a body structure as well as two standing and walking structures connected to the body structure, subsequently designated as legs, with a common centre of mass, subsequently called body, as well as at least one foot structure connected rotatably about at least one axis to respectively one leg via a joint, subsequently designated as foot, which rests in each case on a support surface, wherein at least one foot is pivotable by means of at least one actuator,
**characterised in**
**that** at least one joint angle measuring system, subsequently designated as foot angle sensor, is provided on at least one foot, which detects a body-to-foot angle (bf) as well as a relevant angular velocity (b^{·}f),
**that** at least one gravito-inertial sensor system for detecting body movements in at least one translational plane and about at least one rotational axis in space is provided in the area of the body structure, subsequently designated as in-space sensor, which can detect a translational acceleration of the body in space (b^{··}sₜᵣₐₙₛ) as well as its rotational speed (b's) and its angle to the gravitational vector (bs),
**that** a body-to-foot torque sensor system, subsequently designated as torque sensor, is provided which directly or indirectly detects the torque (τₐₙₖ) acting between body and foot,
**that** an evaluation unit (A) is provided in which in each case signals for the body-to-foot movement (bf, b^{·}f), for the body translation (b^{··}sₜᵣₐₙₛ) and rotation (bs, b^{·}s) and for the body-to-foot torque (τₐₙₖ) undergo fusions to obtain at least one internal estimate for forces acting externally on the robot and positional changes of its support surface, subsequently designated as external stimuli, and in which estimates are combined in further fusions to give a principal estimated value (bs*), whereby the sensor contributions to bs* undergo a weighting depending on the external stimuli and the occurrence of the external stimuli adapts the value of bs*, and
**that** a control unit is provided which, on the basis of the principal estimated value (bs*) generates control signals which serve to trigger the actuator so that a predefinable holding or movement of the robot can be achieved despite the external stimuli.

2. The holding and movement control system according to claim 1,
**characterised in that** the holding and movement control system serves to preserve the equilibrium of the robot.

3. The holding and movement control system according to claim 1 or 2,
**characterised in that** the evaluation unit includes a first estimated value unit (F1) in which a first estimated value (fs) is determined by fusion of signals of the foot angle sensor and the in-space sensor, which value represents the holding and movement of respectively at least one foot in three rotational planes of the space, and these values also apply to the support surface as long as the foot rests non-positively thereon.

4. The holding and movement control system according to claim 3,
**characterised in that** the first estimated value unit (F1) undertakes a sensor signal fusion in the sense of a coordinate transformation of the signal b*s originating from the in-space sensor with the aid of the signal bf originating from the foot angle sensor to obtain an estimated value fs for the tilt angle of the foot and its support surface in space, and that subsequently a conversion unit U1 is provided in which with the aid of the body-to-foot angle (bf), the estimated value fs undergoes a transformation into a measure for the body tilt angle in space (bs').

5. The holding and movement control system according to claim 4,
**characterised in that** the value bs' which depends on the estimated value for the tilt angle of the foot in space fs includes not only foot tilting by tilting the foot support surface in space but also foot tilting due to yielding or uneven support surface.

6. The holding and movement control system according to any one of claims 1 to 5, **characterised in that** the evaluation unit comprises a second estimated value forming unit (F2) in which a second estimated value (fsₜᵣₐₙₛ) is determined by fusion of various signals of the in-space sensor and including the foot angle (bf), which estimated value represents the translation of at least one foot in the three planes of the space and this value also applies to the support surface as long as the foot rests non-positively thereon.

7. The holding and movement control system according to claim 6,
**characterised in that** starting from the second estimated value unit (F2), which serves to form the estimated value fsₜᵣₐₙₛ, a measure for the torque triggered by the translation in the foot joint (τₜᵣₐₙₛ) is created by means of a prediction unit (Block BODY INERT*) and that the estimated value unit (F2) is followed by a conversion unit (U2) in which an equivalent for the body tilt angle in space (bs") is formed

8. The holding and movement control system according to any one of claims 1 to 7, **characterised in that** the evaluation unit (F3) includes a third estimated value unit in which a second estimated value relative to a joint torque caused by gravity in the joint (τ_{grav}) is created on the basis of signals of the in-space sensor as well as on the basis of internal knowledge about the internal mass of the body with reference to the foot joint, the height of the centre of mass above the joint and the magnitude of the Earth's gravity, and that in a subsequent third conversion unit (U3) an equivalent for τ_{grav} is formed in the form of a body tilt angle value in space (bs"').

9. The holding and movement control system according to any one of claims 1 to 8, **characterised in that** the evaluation unit comprises a fourth estimated value unit (F4) in which a fourth estimated value (τₑₓₜ) is determined on the basis of signal from the torque sensor (τₐₙₖ), which corresponds to a joint torque caused by contact forces externally on the body in the form of pressure against the body or pulling thereon as well as external weights or their redistribution on the body and that in a subsequent fourth conversion unit (U4) an equivalent for τₑₓₜ is formed in the form of a body tilt angle value in space (bs"").

10. The holding and movement control system according to claim 9,
**characterised in that** in the fourth estimated value unit (F4) before creating the fourth estimated value (τₑₓₜ), the signal from the torque sensor (τₐₙₖ) is freed from components which are caused externally by the gravitational effect of the body and active actuator forces and are internally predictable, wherein these predictions are made from the in-space sensor (bs) in a processing unit (torque*) and that one torque component of the signal from the torque sensor (τₐₙₖ) is removed which is produced externally by translation of the support surface, this at least insofar as this is reflected in the corresponding estimate (τₜᵣₐₙₛ) of the estimated value unit (F2).

11. The holding and movement control system according to claim 9 or 10,
**characterised in that** the evaluation unit provides a fifth signal fusion unit (F5) which combines the four signals bs', bs", bs"' and bs"" from the estimated value units (F1-F4) and the respectively following conversion units (U1-U4) to form a principal estimated value (bs*) in such a manner that these mutually influence one another and depending on the external stimuli, weightings of the sensor contributions to the main estimated value (bs*) are obtained on the one hand and on the other hand, the magnitude of bs* is adapted to the occurrence of the external stimuli.

12. A method for holding and movement control, in particular for controlling equilibrium, of a two-legged humanoid robot having a body structure as well as two standing and walking structures connected to the body structure, subsequently designated as legs, with a common centre of mass, subsequently called body, as well as at least one foot structure connected rotatably about at least one axis to respectively one leg via a joint, subsequently designated as foot, which rests in each case on a support surface, wherein at least one foot is pivotable by means of at least one actuator,
**characterised by** the following steps:
- sensor detection of a body-to-foot angle (bf) and its angular velocity (b^{·}f) at the joint,
- sensor detection of tilts and linear accelerations of the body in space to determine rotation angle (bs) and angular velocity (b*s) as well as translation acceleration (b^{··}sₜᵣₐₙₛ),
- sensor detection of a torque (τₐₙₖ) between body and foot,
- creating internal estimated values for external forces and positional changes of the support surface, on which the feet of the robot rest, which may endanger its equilibrium, subsequently designated as external stimuli, by fusions of sensor signals,
- creating a principal estimated value (bs*) by a further fusion in the form of a combination of external stimulus estimated values, whereby due to the fusions overall, the sensor contributions to the principal estimated value (bs*) undergo an independent weighting depending on the external stimuli or a stimulus-induced and stimulus-adequate adaptation takes place in the form of a blending-in of disturbance variables, and
- regulating the actuators on the basis of a predefined desired value signal for arbitrary body holding/movement with comparison of the principal estimated value (bs*) so that the predefined body holding and/or movement is achieved despite the external stimuli and the equilibrium control is thereby adapted with regard to the sensor signals used and the control strength to the type, variations and superpositions of the external stimuli.

13. The method according to claim 12, **characterised in that** the external stimuli endangering the equilibrium of the robot firstly consist in effects of force fields, preferably the Earth's gravitational field, secondly in effects of contact forces such as impact against or pulling on the body or weight changes and redistributions on the body and thirdly effects due to deviation from a stationary, fixed and flat support surface on which the feet of the robot stand.

14. The method according to claim 12 or 13, **characterised in that** the estimated values for the external stimuli are created by means of signal fusion as follows:
- signal fusion of the angular velocity signals from the body-to-foot angle (b*f) with those of the body-in-space rotation (b*s) to obtain a first estimated value (fs) which describes the tilting of the foot in space, wherein this also applies to the support surface as long as the foot rests firmly thereon,
- conversion of the estimated value fs with the aid of the body-to-foot angle (bf) into a quantity bs' which corresponds to a body-in-space angle,
- signal fusion of signals from the body-in-space translational acceleration (b^{··}sₜᵣₐₙₛ), body-in-space rotation (bf) to obtain a second estimated value (fsₜᵣₐₙₛ) for the translation of the foot taking place in the external world and its support surface in space,
- further use of signals used for the second estimated value fsₜᵣₐₙₛ together with internal knowledge about the mechanical properties of the robot to predict the joint torque (τₜᵣₐₙₛ) which is produced externally due to the inertial mass of the robot body during translation of the support surface and serves as an auxiliary quantity for a subsequently described calculation of the fourth estimation (τₑₓₜ) for a torque due to external contact forces,
- conversion of the second estimated value fsₜᵣₐₙₛ with the aid of a threshold and a conversion factor into a quantity bs" which is equivalent to a body-in-space angle at which the gravitational effect of the body would produce a joint torque of the magnitude of τₜᵣₐₙₛ,
- signal fusion of the signals of the body-in-space rotation (bs) with internal knowledge about the mass of the body, height of the centre of mass above the joint and magnitude of the Earth's gravitation to obtain a third estimated value (τ_{grav}) for the joint torque which results from deflection of the body from the vertical above the joint,
- further use of signals used for the third estimated value τ_{grav} for prediction of the torque components which are produced externally by the gravitational effect of the body and the active actuator forces (block torque*) and serve as auxiliary quantities for the subsequently mentioned calculation of the fourth estimate (τₑₓₜ),
- conversion of the third estimated value τ_{grav} with the aid of thresholds and conversion factors into a quantity bs"' which is equivalent to a body-in-space angle,
- signal fusion of the signal for the body-to-foot torque (τₐₙₖ) with the predictions on the translation-induced torque (τₜᵣₐₙₛ) as well as on the two torques in the block torque* which are produced by actuator activity and body deflection in space, both derived here from the in-space signal (bs) to create an internal fourth estimate (τₑₓₜ) for that torque which is produced externally by contact forces,
- conversion of the fourth estimate τₑₓₜ with the aid of a threshold and conversion factor into a quantity bs"" which is equivalent to a body-in-space angle.

15. The method according to claim 14, **characterised in that** it is checked whether the estimated value (bs) which represents the holding and movement of respectively at least one foot in the three rotational planes of the space, also applies to the support surface by determining the force closure of the foot with the support surface with the aid of force sensors under the sole of the foot and a comparison with a desired value range.

16. The method according to any one of claims 12 to 15, **characterised in that** a further fusion is made to combine the body-in-space signals bs', bs", bs"' and bs"" formed from the external stimulus estimated values and the bf signals to obtain an internal principal estimated value (bs*).

17. The method according to any one of claims 14 to 16, **characterised in that** by way of the first signal fusion with formation of the estimated value fs and subsequent conversion by means of the body-to-foot angle (bf) to give the body-in-space signal bs', a sensor weighting is carried out in such a manner that for a stationary foot due to a stationary support surface the estimated value is fs = 0° so that the magnitude of the body-in-space signal bs' is merely determined by the body-to-foot angle sensor with the signal (bf) whereas when the support surface is moved, the signal bs' is determined predominantly by the body-in-space angle sensor with the signal (b*s), on account of extensive mutual cancellation of the signals starting from (b*f) and (bf) in the conversion unit to the bs' signal (U1).

18. The method according to claim 12 or 13, **characterised in that** within the framework of the fusion of the estimated value signal to the principal estimated value (bs*), two contributions of the in-space sensor (bs) to bs" are involved,
firstly the bs signal to the third estimated value τ_{grav} and
secondly the bs signal to the block torque* in which a prediction signal for the torque contribution to the body deflection in space is calculated, which, following low-pass filtering and sign reversal, flows into the formation of the fourth estimated value for τₑₓₜ, resulting in a mutual cancellation of the two contributions in the low frequency range which further reduces the overall contribution of the in-space sensor in the principal estimated value (bs*).

19. The method according to any one of claims 14 to 18, **characterised in that** within the framework of the fusion of the estimated value signal to the principal estimated value (bs*), the second estimated value fsₜᵣₐₙₛ makes two contributions to bs",
firstly as a direct contribution via the conversion (U2) into the bs" signal and
secondly indirectly via C' as a contribution with sign reversal via the prediction τₜᵣₐₙₛ to the fourth estimated value τₑₓₜ and therefore to bs"", resulting in a mutual cancellation of the two contributions which further reduces the overall contribution of the in-space sensor in the principal estimated value (bs*).

20. The method according to any one of claims 12 to 19, **characterised in that** as a result of the cooperation of the internal estimated value formations with separate representations of the external stimuli, a loop gain of the control of the actuators via the principal estimated value bs* is in each case adapted to the occurrence or the coming into force of the external force fields, contact forces and weight changes as well as translations of the support surface to the necessary extent, with the result that a "soft control" is possible whereby the again relatively long dead times as well as sensor and estimation inaccuracies become tolerable in the sense of a better robustness of the system.

21. The method according to any one of claims 12 to 20, **characterised in that** in the event of failure of the in-space sensor or in the event of perturbation of the implementation or transmission of its signals (bs, b^{··}sₜᵣₐₙₛ and/or bs), the corresponding estimated values (fs, fsₜᵣₐₙₛ and τ_{grav}) become zero or are actively set to zero and this also applies to the calculations in the blocks torque* and BODY INERTIA*, wherein the equilibrium is nevertheless maintained although with restriction of the adaptation to the external stimulus conditions, which further improves the robustness of the system.

22. The method according to any one of claims 12 to 21, **characterised in that** in the event of failure of the torque sensor or in the event of another perturbation of the implementation or transmission of the τₐₙₖ signal, the estimated value τₐₙₖ is set to zero, wherein the equilibrium is still maintained although with restricted adaptation to the external stimulus conditions, which overall further improves the robustness of the system.

23. The method according to any one of claims 12 to 22, **characterised in that** in the event of failure of the foot angle sensor or in the event of another perturbation of the implementation or transmission of its signals, these are zero or set to zero, wherein the equilibrium is still maintained although with restricted adaptation to the external stimulus conditions, which overall further improves the robustness of the system.

24. The method according to claims 22 and 23, **characterised in that** even when failure of the foot angle sensor system and the torque sensor system coincide, the equilibrium is still maintained although the adaptation to the external stimulus conditions is thereby restricted, which overall further improves the robustness of the system.

25. The method according to any one of claims 14 to 24, **characterised in that** in "working pauses" of the robot, the functional state of the sensors and the estimation fusions is checked whereby the robot executes active leaning movements on the stationary support surface, wherein the estimated signal values τₑₓₜ, fs and fsₜᵣₐₙₛ must be approximately zero and bs' ≈ bs"" must be satisfied, otherwise the data are compared with stored tables which predefine blocks of internal signals, which further improves the robustness of the system overall.

26. The method according to any one of claims 12 to 25, **characterised in that** the torque signal τₐₙₖ from the torque sensor can either be calculated from the COP (centre of pressure) measured by means of force sensors under the sole of the foot, or from force sensors in the actuator mounting or from a fusion of both signals, wherein the formation of an estimated value of τₐₙₖ is only allowed if force closure is given between foot and support surface according to the criterion already specified, which further improves the robustness of the system.

## Revendications

1. Système de maintien et de contrôle des mouvements pour un robot à deux jambes, conçu comme un humanoïde, disposant d'une structure de corps et de structures de marche et de maintien, reliées à la structure de corps et ci-après appelées jambes, avec un centre de gravité commun, ci-après appelé corps, ainsi que d'une structure de pied, respectivement reliée à une jambe, de façon rotative autour d'au moins un axe, par une articulation, ci-après appelée pied, reposant respectivement sur une surface d'appui, au moins un pied pouvant pivoter au moyen d'au moins un actionneur,
**caractérisé en ce que**
au moins un système de mesure d'angle d'articulation, ci-après appelé capteur d'angle de pied, est prévu sur au moins un pied, capable de mesurer un angle corps-pied (bf), ainsi que la vitesse (b^{·}f) d'angle correspondante,
dans la région de la structure de corps, il est prévu au moins un système de détection gravito-inertiel pour la détection des mouvements du corps dans au moins un plan de translation et autour d'au moins un axe de rotation dans l'espace, ci-après appelé capteur spatial, permettant de mesurer une accélération de translation du corps dans l'espace (b^{··}Sₜᵣₐₙₛ) ainsi que sa vitesse de rotation (b's) et son angle par rapport au vecteur de gravitation (bs),
il est prévu un système de détection du couple de rotation corps-pied, ci-après appelé capteur de couple de rotation, capable de mesurer directement ou indirectement le couple de rotation (τₐₙₖ) agissant entre le corps et les pieds,
il est prévu une unité d'évaluation (A), dans laquelle des signaux pour le mouvement du corps par rapport aux pieds (bf, bf), pour la translation du corps (b^{··}sₜᵣₐₙₛ) et la rotation du corps (bs, b*s) ainsi que pour le couple de rotation corps-pieds (τₐₙₖ) entrent en fusion, pour l'obtention d'au moins une évaluation interne pour les forces agissant de l'extérieur sur le robot et les changements de position de sa surface d'appui, ci-après appelées stimuli externes, et dans laquelle les évaluations sont réunies dans d'autres fusions, en une estimation principale (bs*), les contributions de capteur à bs* connaissant une nouvelle pondération en fonction des stimuli externes, et l'apparition des stimuli externes adaptant la grandeur de bs*, et
il est prévu une unité de contrôle générant des signaux de réglage, sur la base de l'estimation principale (bs*), qui servent à la commande de l'actionneur, de manière à pouvoir réaliser une position ou un mouvement prédéfinis du robot, malgré les stimuli externes.

2. Système de contrôle de position et de mouvement selon la revendication 1,
**caractérisé en ce que** le système de contrôle de position et de mouvement sert au maintien de l'équilibre du robot.

3. Système de contrôle de position et de mouvement selon l'une des revendications 1 ou 2,
**caractérisé en ce que** l'unité d'évaluation comprend une première unité d'estimation (F1), dans laquelle une première estimation (fs) est déterminée par fusion des signaux du capteur d'angle de pied et du capteur spatial, représentant la position et le mouvement d'au moins un pied dans trois plans de rotation dans l'espace, ces valeurs étant également valables pour la surface d'appui, tant que le pied s'appuie par liaison de force.

4. Système de contrôle de position et de mouvement selon la revendication 3,
**caractérisé en ce que** la première unité d'estimation (F1) exécute une fusion de signaux de capteur, au sens d'une transformation des coordonnées du signal bs venant du capteur d'angle de pied, pour l'obtention d'une estimation fs pour l'angle de basculement du pied et de sa surface d'appui dans l'espace, et
il est ensuite prévu une unité de transformation, dans laquelle l'estimation fs connaît une transformation en une mesure pour l'angle de basculement du corps (bs'), à l'aide de l'angle corps-pied (bf).

5. Système de contrôle de position et de mouvement selon la revendication 4,
**caractérisé en ce que** la valeur bs', qui dépend de l'estimation pour l'angle de basculement du pied dans l'espace fs, ne comprend pas seulement le basculement du pied par basculement de la surface d'appui du pied dans l'espace, mais aussi le basculement du pied en raison d'une surface d'appui penchée ou inclinée.

6. Système de contrôle de position et de mouvement selon l'une des revendications 1 à 5,
**caractérisé en ce que** l'unité d'évaluation comprend une deuxième unité d'estimation (F2), dans laquelle une deuxième estimation (fsₜᵣₐₙₛ) est déterminée, par fusion de différents signaux du capteur spatial et en tenant compte de l'angle du pied (bf), représentant la translation d'au moins un pied dans les trois plans spatiaux, cette valeur étant également valable pour la surface d'appui, tant que le pied s'appuie par liaison de force.

7. Système de contrôle de position et de mouvement selon la revendication 6,
**caractérisé en ce qu'**à partir de la deuxième unité d'estimation (F2) servant à la formation de l'estimation fsₜᵣₐₙₛ, une mesure pour le couple de rotation déclenché par la translation dans l'articulation du pied (τₜᵣₐₙₛ) est établie, au moyen d'une unité prévisionnelle (Block BODY INERT*), et
l'unité d'estimation (F2) est suivie par une unité de transformation (U2), dans laquelle est formé un équivalent pour l'angle de basculement du corps dans l'espace (bs").

8. Système de contrôle de position et de mouvement selon l'une des revendications 1 à 7,
**caractérisé en ce que** l'unité d'évaluation comprend une troisième unité d'estimation (F3), dans laquelle une deuxième estimation pour un couple de rotation d'articulation dans l'articulation (τ_{grav}), entraîné par la gravitation, est établie sur la base de signaux du capteur spatial et sur la base de connaissances internes sur l'inertie de masse du corps par rapport à l'articulation du pied, sur la hauteur du centre de gravité au-dessus de l'articulation et sur l'attraction terrestre, et
un équivalent pour τ_{grav} sous la forme d'une valeur d'angle de basculement du corps dans l'espace (bs"') est formé dans une troisième unité de transformation (U3) consécutive.

9. Système de contrôle de position et de mouvement selon l'une des revendications 1 à 8,
**caractérisé en ce que** l'unité d'évaluation comprend une quatrième unité d'estimation (F4), dans laquelle une quatrième estimation (τₑₓₜ) est enregistrée sur la base de signaux du capteur de couple de rotation (τₐₙₖ), correspondant à un couple de rotation occasionné par les forces de contact agissant de l'extérieur sur le corps, sous la forme d'une pression sur le corps ou d'une traction, et de poids extérieurs ou de leur changement de répartition sur le corps, et
un équivalent pour τₑₓₜ est formé, dans une quatrième unité de transformation (U4) consécutive, sous la forme d'une valeur d'angle de basculement du corps dans l'espace (bs"").

10. Système de contrôle de position et de mouvement selon la revendication 9,
**caractérisé en ce que** dans la quatrième unité d'estimation (F4), avant l'établissement de la quatrième estimation (τₑₓₜ), le signal du capteur de couple de rotation (τₐₙₖ) est libéré de composantes conditionnées par l'effet de gravitation du corps et les forces actives de l'actionneur et prévisibles en interne, ces prévisions étant effectuées dans une unité de traitement (Couple de rotation*) à partir du signal du capteur spatial (bs), et
une composante de couple de rotation du signal du capteur de couple de rotation (τₐₙₖ) est écartée, qui est provoquée par la translation de la surface d'appui, du moins tant qu'elle se répercute sur l'estimation correspondante de l'unité d'estimation (F2).

11. Système de contrôle de position et de mouvement selon l'une des revendications 9 ou 10,
**caractérisé en ce que** l'unité d'évaluation prévoit une cinquième unité de fusion de signaux (F5), qui réunit les quatre signaux bs', bs", bs"' et bs"" des unité d'estimation (F1 - F4) et des unités de transformations correspondantes consécutives (U1 - U4), de telle manière qu'elle s'influencent mutuellement et que des modifications de pondérations des contributions de capteurs à l'estimation principale (bs*) ont lieu en fonction des stimuli extérieur.

12. Procédé pour le contrôle de la position et du mouvement, particulièrement pour le contrôle de l'équilibre d'un robot humanoïde à deux jambes, disposant d'une structure de corps ainsi que de deux structures de maintien et de marche, reliées à la structure de corps, ci-après appelées jambes, avec un centre de gravité commun, ci-après appelé corps, ainsi que d'une structure de pied respective, reliée de façon rotative autour d'au moins un axe à chacune des jambes, par le biais d'une articulation, ci-après appelée pied, reposant respectivement sur une surface d'appui, au moins un pied pouvant pivoter au moyen d'au moins un actionneur,
**caractérisé par** les étapes de procédé suivantes :
- détection par capteur d'un angle corps-pied (bf) et de sa vitesse d'angle (b^{·}f) sur l'articulation,
- détection par capteur des basculements et des accélérations linéaires du corps dans l'espace, pour la détermination de l'angle de rotation (bs), et de la vitesse d'angle (b^{·}s) ainsi que de l'accélération de translation (b^{··}sₜᵣₐₙₛ),
- détection par capteur d'un couple de rotation (τₐₙₖ) entre le corps et les pieds,
- établissement d'estimations internes pour les forces extérieures et les changements de position de la surface d'appui, sur laquelle reposent les pieds du robot, susceptibles de le déséquilibrer, ci-après appelés stimuli externes, par des fusions de signaux de capteur,
- établissement d'une estimation principale (bs*), par une fusion supplémentaire sous la forme d'une fusion des estimations de stimuli externes, les fusions entraînant dans l'ensemble une nouvelle pondération automatique des contributions de capteurs à l'estimation principale (bs*), en fonction du stimulus externe, ou encore une adaptation en fonction des stimuli et adéquate aux stimuli, sous la forme d'une pré-compensation, et
- réglage des actionneurs sur la base d'un signal de valeur de réglage pour une position/un mouvement souhaité(e), avec comparaison de l'estimation principale (bs*), de sorte que la position et/ou le mouvement prédéfini(e) du corps peut être réalisée malgré les stimuli externes, et que le contrôle de l'équilibre s'adapte au type, aux changements et aux superpositions des stimuli externes, en fonction des signaux de capteur utilisés et de la force de réglage.

13. Procédé selon la revendication 12,
**caractérisé en ce que** les stimuli externes susceptibles de déséquilibrer le robot consistent premièrement dans les effets de champs d'intensité, de préférence du champ d'attraction terrestre, deuxièmement dans les effets des forces de contact, telles qu'un choc ou une traction sur le corps ou encore des modifications de poids et de nouvelles répartitions de poids sur le corps, et troisièmement les effets produits par les déviations d'une surface d'appui stationnaire, fixe et plate, sur laquelle reposent les pieds du robot.

14. Procédé selon l'une des revendications 12 ou 13,
**caractérisé en ce que** l'établissement des estimations pour les stimuli externes au moyen d'une fusion de signaux est réalisé de la manière suivante :
- fusion de signaux entre les signaux de vitesse d'angle de l'angle entre le corps et les pieds (b*f) et ceux de la rotation du corps dans l'espace (b^{·}s), pour l'obtention d'une première estimation (fs) décrivant le basculement du pied dans l'espace, cela étant également valable pour la surface d'appui, lorsque le pied s'appuie dessus fixement,
- transformation de l'estimation fs à l'aide de l'angle corps-pied (bf), en une grandeur bs' correspondant à un angle du corps dans l'espace,
- fusion de signaux entre les signaux d'accélération de translation du corps dans l'espace (b^{·}sₜᵣₐₙₛ), de rotation du corps dans l'espace (bs) et de l'angle corps-pied (bf) et d'angle corps-pied (bf), pour l'obtention d'une deuxième estimation (fsₜᵣₐₙₛ) pour la translation du pied dans le monde extérieur et de sa surface d'appui dans l'espace,
- réutilisation des signaux nécessaires à la deuxième estimation fsₜᵣₐₙₛ, ensemble avec les connaissances internes sur les propriétés mécaniques du robot, pour la prévision du couple de rotation de l'articulation (τₜᵣₐₙₛ), produit à l'extérieur par l'inertie du corps de robot lors d'une translation de la surface d'appui et servant comme variable auxiliaire dans un calcul décrit ultérieurement de la quatrième estimation (τₑₓₜ) pour un couple de rotation dû à des forces de contact externes,
- transformation de la deuxième estimation fsₜᵣₐₙₛ à l'aide d'un seuil et d'un facteur de transformation en une grandeur bs", équivalente à un angle corps-pied, dans lequel l'effet de gravitation du corps produirait un couple de rotation d'articulation de la grandeur de τₜᵣₐₙₛ,
- fusion de signaux entre les signaux de la rotation du corps dans l'espace (bs), avec des connaissances internes sur la masse du corps, la hauteur du centre de gravité au-dessus de l'articulation et la grandeur de l'attraction terrestre, pour l'obtention d'une troisième estimation (τ_{grav}) pour le couple de rotation d'articulation résultant de la déviation du corps de la verticale au-dessus de l'articulation,
- réutilisation des signaux nécessaires à la troisième estimation, pour la prévision des composantes de couple de rotation, qui sont causées à l'extérieur par l'effet de gravitation du corps et les forces actives de l'actionneur (Bloc couple de rotation*) et servent comme variable auxiliaire dans le calcul ultérieur de la quatrième estimation mentionnée (τₑₓₜ),
- transformation de la troisième estimation τ_{grav} à l'aide de seuils et de facteurs de transformation en une grandeur bs"' équivalente à un angle du corps dans l'espace,
- fusion de signaux entre le couple de rotation corps-pied (τₐₙₖ), avec les prévisions pour le couple de rotation entraîné par translation (τₜᵣₐₙₛ) et pour les deux couples de rotation dans le Bloc couple de rotation*, apparaissant en raison de l'activité de l'actionneur et de la déviation du corps dans l'espace, tous deux ici dérivés du signal spatial (bs), pour l'établissement dune quatrième estimation interne (τₑₓₜ) pour le couple de rotation causé à l'extérieur par des forces de contact,
- transformation de la quatrième estimation τₑₓₜ à l'aide de seuils et de facteurs de transformation en une grandeur bs"" équivalente à l'angle du corps dans l'espace.

15. Procédé selon la revendication 14,
**caractérisé en ce qu'**il est vérifié si l'estimation (fs) représentant la position et le mouvement d'au moins un pied dans les trois plans de rotation dans l'espace, est également valable pour la surface d'appui, en constatant la liaison de force du pied avec la surface d'appui, à l'aide de capteurs de force sous la plante du pied et d'une comparaison avec une plage de valeurs de réglage.

16. Procédé selon l'une des revendications 12 à 15,
**caractérisé en ce qu'**une fusion supplémentaire a lieu, pour la réunion des estimations de stimuli externes et des signaux du corps dans l'espace bs', bs", bs"' et bs"', formés avec le signal bf, avec obtention d'une estimation interne (bs*).

17. Procédé selon l'une des revendications 14 à 16,
**caractérisé en ce qu'**au cours de la première fusion de signaux avec formation de l'estimation fs et transformation consécutive au moyen de l'angle corps-pied (bf) en vue du signal du corps dans l'espace bs', une pondération de capteur est effectuée de telle manière, que lorsque le pied est stationnaire de par la surface d'appui stationnaire, l'estimation est fs = 0°, de sorte qu'alors, la grandeur du signal du corps dans l'espace bs' est déterminée seulement par le capteur d'angle corps-pied avec le signal (bf), tandis que lorsque la surface d'appui est en mouvement, le signal bs' est déterminé majoritairement par le capteur d'angle du corps dans l'espace, avec le signal (b's), en raison d'un effacement mutuel étendu des signaux partant de (bf) et (bf), dans l'unité de transformation pour le signal bs' (U1).

18. Procédé selon l'une des revendications 12 ou 13,
**caractérisé en ce que** dans le cadre de la fusion des signaux d'estimation pour l'estimation principale (bs*), deux contributions du capteur spatial (bs) participent à bs*,
d'une part le signal bs pour la troisième estimation τ_{grav}, et
d'autre part le signal bs pour le Bloc couple de rotation*, dans lequel un signal prévisionnel est calculé pour la contribution du couple de rotation par déviation du corps dans l'espace, qui est intégré à la formation de la quatrième estimation pour τₑₓₜ, après un filtrage passe-bas et inversion de signe, ce qui entraîne un effacement mutuel des deux contributions dans la plage des basses fréquences, réduisant encore davantage la contribution globale du capteur spatial à l'estimation principale (bs*).

19. Procédé selon l'une des revendications 14 à 18, **caractérisé en ce que** dans le cadre de la fusion des signaux d'estimation pour l'estimation principale (bs*), la deuxième estimation fsₜᵣₐₙₛ apporte deux contributions à bs*,
d'une part une contribution directe par la transformation (U2) en vue du signal bs", et
d'autre part indirectement par C', en tant que contribution avec inversion de signe, par la prévision τₜᵣₐₙₛ pour la quatrième estimation τₑₓₜ et donc pour bs""
ce qui entraîne un effacement mutuel des deux contributions, réduisant encore davantage la contribution globale du capteur spatial à l'estimation principale (bs*).

20. Procédé selon l'une des revendications 12 à 19,
**caractérisé en ce que** suite à la coopération des formations d'estimations internes avec des représentations séparées des stimuli externes, un gain de boucle du réglage des actionneurs par l'estimation principale bs* s'adapte dans une mesure appropriée à l'apparition ou à l'activation des champs d'intensité externes, des forces de contact et des changements de poids, ainsi que des translations de la surface d'appui, permettant ainsi un réglage souple rendant tolérables des temps morts relativement longs ainsi que des inexactitudes de capteur ou d'estimation, dans le sens d'une meilleure robustesse du système.

21. Procédé selon l'une des revendications 12 à 20,
**caractérisé en ce que** lors d'une panne du capteur spatial ou d'une défaillance de la conversion ou transmission de ses signaux (b^{·}s, b^{·}sₜᵣₐₙₛ et/ou bs), les estimations correspondantes (fs, fsₜᵣₐₙₛ et τ_{grav}) deviennent égales à zéro ou sont activement mises à zéro, cela étant également valable pour les calcules dans les Blocs couple de rotation* et le BODY INERTIA*,
l'équilibre étant ainsi toujours maintenu, même en réduisant l'adaptation aux conditions des stimuli externes, ce qui améliore encore davantage la robustesse du système.

22. Procédé selon l'une des revendications 12 à 21,
**caractérisé en ce que** lors d'une panne du capteur de couple de rotation ou d'une autre défaillance de la conversion ou transmission du signal τₐₙₖ, l'estimation τₑₓₜ est mise à zéro,
l'équilibre étant ainsi toujours maintenu, même avec une adaptation réduite aux conditions des stimuli externes, ce qui améliore encore davantage la robustesse du système dans son ensemble.

23. Procédé selon l'une des revendications 12 à 22,
**caractérisé en ce que** lors d'une panne du capteur d'angle du pied ou d'une autre défaillance de la conversion ou transmission de ses signaux, ceux-ci sont à zéro ou mis à zéro,
l'équilibre étant ainsi toujours maintenu, même avec une adaptation réduite aux conditions des stimuli externes, ce qui améliore encore davantage la robustesse du système dans son ensemble.

24. Procédé selon l'une des revendications 22 et 23,
**caractérisé en ce que** même en cas de panne simultanée du système de capteur d'angle de pied et du système de capteur de couple de rotation, l'équilibre reste toujours maintenu, même si de ce fait, l'adaptation aux conditions des stimuli externes est réduite, permettant ainsi d'améliorer encore davantage la robustesse du système dans son ensemble.

25. Procédé selon l'une des revendications 14 à 24,
**caractérisé en ce que** pendant les pauses de travail du robot, l'état de fonctionnement des capteurs et des fusions d'estimations sont vérifiés, **en ce qu'**il effectue des mouvements d'appui actifs sur la surface d'appui stationnaire, les signaux d'estimation τₑₓₜ, fs et fsₜᵣₐₙₛ devant être quasiment à zéro, et bs' ≈bs"', faute de quoi une comparaison des données avec des tableaux enregistrés détermine les verrouillages de signaux internes, ce qui améliore encore davantage la robustesse du système dans son ensemble.

26. Procédé selon l'une des revendications 12 à 25,
**caractérisé en ce que** le signal de couple de rotation τₐₙₖ du capteur de couple de rotation peut être calculé soit à partir du COP (centre of pressure), mesuré au moyen de capteurs de force sous la plante des pieds, ou encore à partir de capteurs de force dans la fixation des actionneurs, ou à partir d'une fusion des deux signaux, la formation d'une estimation de τₑₓₜ étant seulement autorisée d'après le critère déjà mentionné de la liaison de force entre le pied et la surface d'appui, ce qui améliore encore davantage la robustesse du système.
